# EUROPEAN PATENT SPECIFICATION

(11) **EP 0 749 597 B1**
(45) Date of publication and mention of the grant of the patent: **01.10.2003**
(21) Application number: 95907442.8
(22) Date of filing: 10.01.1995
(51) Int. Cl.: G06F 9/28, G06F 13/10, G06F 15/16, H04L 29/06

(54) **DISTRIBUTED PROTOCOL FRAMEWORK**
ARCHITEKTUR FÜR EIN AUF MEHRERE RECHNER VERTEILTES ABARBEITUNGSPROTOKOLL
ARCHITECTURE DE PROTOCOLE REPARTIE

(30) Priority: 10.01.1994 US 179580
(43) Date of publication of application: 27.12.1996
(73) Proprietor: AMDAHL CORPORATION, Sunnyvale California 94086 (US)
(72) Inventor: SZWERINSKI, Helge, Cupertino, CA 95014 (US); GAJJAR, Yatin, Fremont, CA 94555 (US); SANGHVI, Ashvin, San Jose, CA 95133 (US)
(74) Representative: Crawford, Andrew Birkby
(86) International application number: PCT/US95/00536
(87) International publication number: WO 95/019000

(56) References cited:
- EP-A- 0 432 924
- US-A- 5 150 464
- US-A- 5 165 021
- NASSER MODIRI: "THE ISO REFERENCE MODEL ENTITIES" IEEE NETWORK: THE MAGAZINE OF COMPUTER COMMUNICATIONS,US,IEEE INC. NEW YORK, vol. 5, no. 4, 1 July 1991 (1991-07-01), pages 24-33, XP000249548 ISSN: 0890-8044
- COMMUNICATIONS OF THE ACM, Volume 31, No. 3, March 1988, DAVID R. CHERITON, "The V Distributed System", pages 314-333.
- AT&T BELL LABORATORIES TECHNICAL JOURNAL, Volume 63, No. 8, October 1984, D.M. RITCHIE, "A Stream Input-Output System", pages 1897-1910.

## Description

### BACKGROUND OF THE INVENTION

The present invention relates to the field of distributing protocol stacks to multiple operating systems.

A portion of the disclosure of this patent document contains material which is subject to copyright protection. The copyright owner has no objection to the facsimile reproduction by anyone of the patent document or the patent disclosure, as it appears in the Patent and Trademark Office patent file or records, but otherwise reserves all copyright rights whatsoever.

Many general purpose computers (GPC) that have an operating system (such as UNIX, NT, UTS and so on) have a STREAMS framework for implementing a protocol stack. The protocol stack communicates with input/output (I/O) drivers (especially communications drivers).

The expansion of client-server computing with demands for increased performance has presented problems. Although client work station power has increased, system performance has been constrained by server I/O limitations since dramatic jumps in microprocessor performance have not been matched by similar boosts in server I/O performance.

Many multiprocessor based systems have employed a Symmetric Multiple Processing architecture (SMP). In a SMP architecture, each of a plurality of central processing units, including processors CPU1, CPU2, ..., CPUn, executes all tasks, including kernel I/O processing tasks. The goal of the operating system is to enable the n processors to deliver close to n-times the performance of one processor. Although it is relatively easy to achieve this n-times multiplier effect for pure computing jobs internal to the processor, it is relatively difficult to achieve this n-times multiplier effect for overall system performance including general I/O processing. I/O processing tends to cause frequency interrupts that invalidate the cache of the interrupted processor thereby slowing down the system. Because of this I/O processing problem with SMP architectures, better performance is predicted when some processors are dedicated to I/O processing (off-loading) in an asymmetrical multiprocessing (AMP) architecture.

However, asymmetrical multiprocessing architectures which have been proposed have been system specific without interfaces that permit a standard I/O framework and these proposed systems therefore have not provided transportability from system to system.

In view of the above background, there is a need for improving distributed computing systems and particularly protocol stacks for distributed computing.

In EP-A-0 432 924 (AMERICAN TELEPHONE & TELEGRAPH) a data communications architecture is disclosed in which high-level communications services provided to a host processor are arranged into independent horizontal functions that are processed in parallel. Any conditional dependencies among the horizontal functions are resolved by a connector that interfaces the horizontal functions to an application layer of the host processor. Additionally, communication performance is enhanced by allowing adaptive specification of a high-level protocol employed in the architecture for providing the high-level services. This adaptive specification may be initiated in response to changing user requirements or varying network parameters. Then, a high-level protocol specification is obtained by choosing appropriate values for parameters of the horizontal functions which are parametrically programmable.

### SUMMARY

The present invention as set forth in the appended claims is a distributed computing system having a distributed protocol stack. In a system including one or more general purpose computers or other application processors for running applications, the distributed protocol stack off-loads communication or other I/O processing from the application processor to dedicated I/O processors thereby enhancing the performance/capacity of the system.

The distributed protocol stack is formed of a stack top and a stack bottom so that together the stack top and stack bottom comprise a full stack functionally equivalent to a non-distributed stack running on an application processor. Both the application processors and the I/O processors together appear to execute the full protocol stack, but the application processor only executes the stack top while the I/O processor only executes the stack bottom.

The distributed protocol stack overcomes the problem of performance-limiting I/O functions running on the application processor by delegating those I/O functions to multiple dedicated I/O processors which do not have the full overhead of the application processor and efficiently run the stack bottom.

The distributed protocol stack improves the overall throughput of the system both in the application processors which have fewer interruptions and the I/O processors which are not burdened with the complexity of the application processors and hence are more efficient. The distributed protocol stack uses drivers having a system call interface that preserves compatibility with the source and binary software of existing user applications designed to execute on a system with a non-distributed protocol stack.

Also, the distributed protocol stack is flexible and portable and thereby shortens the time to market for new products.

The distributed protocol stack is, for example, a distribution of the UNIX STREAMS environment to dedicated I/O processors. The system call interface is unchanged regardless of the location of the remote STREAMS environment.

The foregoing and other objects, features and advantages of the invention will be apparent from the following detailed description in conjunction with the drawings.

### BRIEF DESCRIPTION OF THE DRAWINGS

FIG. 1 is a block diagram representation of a computer system having a distributed communication facility.
FIG. 2 is a block diagram representation of a general purpose computer (GPC) system having multiple application processing units (APU) and multiple I/O processing units (I/OPU) using the distributed communication facility of the FIG. 1 type.
FIG. 3 is a block diagram representation of the distributed communication facility of FIG. 1 for a device *abc.*
FIG. 4 is a block diagram representation of the distributed communication facility indicating certain states of execution during operation.
FIG. 5 is a block diagram representation of the bottom portion of the distributed communication facility of FIG. 3.

### DETAILED DESCRIPTION

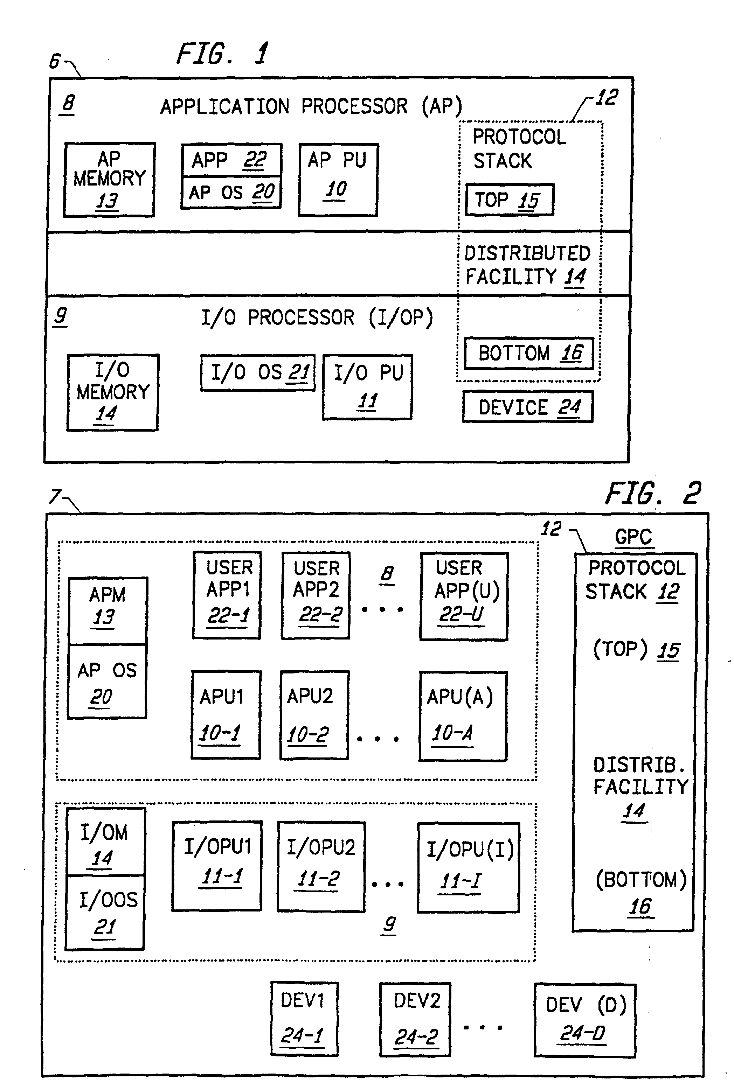

### Distributed Protocol Stack - FIG. 1.

In FIG. 1, a distributed computer system 6 is formed with a protocol stack 12 distributed between a stack top 15 and a bottom stack 16. The computer system 6 includes one or more application processors 8 having an application processing unit (AP PU) 10 for running applications, such as application (APP) 22, under control of an application processor operating system (AP OS) 20. The application processor 8 also includes application memory 13 which is within the address space of the processor 8 under control of the AP operating system 20.

The computer system 6 includes one or more I/O processors 9 having an I/O processing unit (I/O PU) 11 for running under control of an I/O processor operating system (I/O OS) 21. The I/O processor 9 also includes I/O memory 14 which is within the address space of the processor 9 under control of the I/O operating system 21. The I/O processor 9 additionally includes at least one I/O device 24 communicating through protocol stack 12 with the other parts of the communication system 6. Device 24 is a terminal, a network or other I/O device.

In the FIG. 1 computer system 6, the operating system 20 is typical of most general-purpose computer operating systems (such as UNIX, NT, UTS and so forth) that have a STREAMS framework for which most drivers (especially communications drivers) are written.

In the FIG.1 system, the distributed protocol stack 12 off-loads communication or other I/O processing from the application processor 8 to a dedicated I/O processors 9 thereby enhancing the performance/capacity of the computer system 6.

The distributed protocol stack 12 is formed of a stack top 15 and a stack bottom 16 so that together the stack top 15 and stack bottom 16 are functionally equivalent to a conventional non-distributed full protocol stack running only on an application processor 8. The distributed protocol stack 12 includes a distributed facility 14 logically between the stack top 15 and the stack bottom 16 whereby stack references made in the stack top 15 to the stack bottom 16 are transferred to the stack bottom 16. Both the application processor 8 and the I/O processor 9 each appear to execute the full protocol stack 12, but the application processor 8 only executes the stack top while the I/O processor 9 only executes the stack bottom 16.

The distributed protocol stack 12 overcomes the problem of performance-limiting I/O functions running on the application processor 8 by delegating those I/O functions to an I/O processor 9. The I/O processor 9 is designed not to have the full overhead of the application processor 8 so that the I/O processor 9 is able to efficiently run the stack bottom 16.

The distributed protocol stack 12 improves the overall throughput of the system since the application processor 8 has fewer I/O interruptions and the I/O processor 9 is not burdened with the complexity of the application processor 8.

The distributed protocol stack 12 uses drivers having a system call interface that preserves compatibility with the source and binary software of existing user applications designed to execute on a system with a non-distributed protocol stack. The application 22 is, for example, a user application designed to execute on a system with a non-distributed protocol stack.

Also, the distributed protocol stack 12 is flexible and portable and thereby can shorten the time to market for newly developed products.

The distributed protocol stack 12 is, for example, a distribution of the UNIX STREAMS environment to one or more dedicated I/O processors, such as processor 9. The system call interface of computer system 6 that would otherwise exist for a non-distributed environment is unchanged regardless of the distribution of the STREAMS environment to the remote I/O processor 9.

In the I/O processor 9, the I/O operating system 21 is a real-time operating system which executes efficiently with high speed and, in such case, the stack bottom 16 is fine-tuned to run with the real-time operating system.

In the FIG. 1 system, the distributed protocol stack 12 transparently extends the STREAMS definition to the real-time environment of I/O processor 9. Specifically, applications such as application 22 in FIG. 1 and the STREAMS environment on the application processor 8 are not aware that part of the communication stack has been off-loaded to I/O processor 9. The drivers and modules written to run on the native operating system, like AP operating system 20 prior to any distribution, also can run on the faster environment of the dedicated high-speed I/O processor 9.

The distributed environment of the FIG. 1 system not only helps to promote software-reusability, but also leads to greater system throughput with minimum effort by system developers.

### AMP Architecture With Distributed Protocol Stack - FIG. 2.

2.0 General.

FIG. 2 depicts a multiprocessing system that employs an asymmetrical multiprocessing (AMP) architecture. In the FIG. 2 architecture, each of a plurality of application processing units 10, including application processing units APU1, APU2, ..., APU(A) designated 10-1, 10-2, ..., 10-A, executes less than all tasks, delegating kernel I/O processing tasks to the I/O processing units 11, including I/O processing units I/OPU1, I/OPU2, ..., I/OPU(I) designated 11-1, 11-2, ..., 11-I. Communication is with each of the I/O devices 24, including devices 24-1, 24-2, ..., 24-D.

In FIG. 2, the number U of users, the number A of application processing units, the number I of I/O processing units, and the number D of devices generally are all different numbers.

In FIG. 2, the computing system includes a distributed protocol stack 12 having a stack top 15 and a stack bottom 15.

In FIG. 2, a distributed computing system is formed by the general purpose computer system (GPC) 7 with a distributed protocol stack 12. In the system 7, the application processors 10 run applications 22 and the distributed protocol stack 12 off-loads communication or other I/O processing from the application processors 10 to dedicated I/O processors 11 thereby enhancing the performance/capacity of the system 7.

The AMP architecture of the FIG. 2 system could readily be modified to a symmetrical multi-processor architecture (SMP) if the distributed protocol stack 12 were formed of a single non-distributed stack executing entirely in the application processor 8.

However, in the AMP architecture, the application processor 8 appears to execute the full protocol stack, but the application processor 8 only executes the stack top 15. Similarly, the I/O processor 9 only executes the stack bottom 16, but makes the slack top 15 and application 22 appear to be executed locally on the application processor 8.

Since many general purpose computer operating systems have a STREAMS framework for which I/O drivers (especially communications drivers) are written, the distributed protocol stack 12 permits those pre-existing drivers to be used in the FIG. 2 system unaware that part of the communication stack has been off-loaded. The drivers and modules written to run on a non-distributed native operating system run more efficiently on the dedicated high speed I/O processing units 11 in a faster environment. The drivers and other modules that are pre-existing, therefore, can still be used in the FIG. 2 system.

In the embodiment described, the Distributed STREAMS Framework Drivers (dsfdrv.c and mirror. c) are used for UNIX SVR3.2/UNIX SVR4 host-based operating system software. These STREAMS drivers(dsfdrv.c, mirror.c) provide the necessary support to propagate the STREAMS environment of the UNIX native and non-distributed SVR3.2/UNIX SVR4 kernel to a real-time environment on a dedicated I/O processor 9. The drivers transparently inter-connect a multiple STREAMS environment. Also the system call interface of the Distributed STREAMS Framework (DSF) drivers (dsfdrv.c, mirror.c) preserves the source and binary compatibility of the existing base of user applications. The system call interface is unchanged regardless of the location of the remote STREAMS environment.

Each remote driver and remote module that is accessible by the local user process is associated with an independent instantiation of this driver/module in the local environment. This instantiation of this driver/module is called a proxy driver/module.

In the embodiment described, application processor 8 STREAMS based DSF drivers are present for a UNIX SVR4 or any UNIX SVR3.2 kernel. The functions necessary to achieve a connection between the DSF drivers in the local environment (UNIX SVR4 or UNIX SVR3.2) of processor 8 and the DSF drivers in the remote environment of I/O processor 9 are provided.

The remote DSF environment 62 enables the normally local STREAMS environment in APprocessor 8 to be extended to an environment that facilitates the execution of STREAMS drivers and modules remotely in I/O processor 9 of FIGs. 1 and 2. The drivers and modules which run on a native local operating system also run on I/O processor 9 which can have a non-UNIX environment.

In a conventional communication protocol, a processor including one or more processing units, memory, local peripheral devices supporting a STREAMS framework is typically. However in the Distributed STREAMS framework (DSF) more than one STREAMS environment exists. All STREAMS based components (system calls, libraries, etc) which expect a single STREAM environment transparently access the resources of DSF. However, because two different operating systems are running (AP OS 20 and I/0 OS 21), the STREAMS driver/modules executing in the remote STREAMS environment of I/O processor 9 are not able to share data via memory 13 with STREAMS driver/modules in the host STREAMS environment. Data can be shared by sending STREAMS based messages. The STREAMS framework defined for a single native operating system expects such messages.

Although the STREAMS environment is normally limited to a mono-processor or Symmetrical Multiple Processor (SMP) UNIX kernel, the present invention extends the STREAMS environment to a Asymmetrical Multiple Processor (AMP) architecture. All software developed for use in the SMP UNIX kernel is transparently migrated to remote I/O processors 9 running real-time operating systems such as I/O OS 21. The architecture extension can be distributed over any combination of the STREAMS environments. In one example described, the DSF of the present embodiment is a host-controller environment.

In the present embodiment, Drivers/Modules which are ported to the remote environment 62 comply with the SVR4 STREAMS environment. Drivers and Modules running in the remote environment 62 of I/O processor 9 run in that local environment concurrently without modifcation to the applications 22 running in the environment of AP processor 8.

For example in the present embodiment, it is possible for the ioctl link(I_LINK or I_PLINK) request to time out on the host application processor 8 STREAMS environment while the remote STREAMS environment on the I/O processor 9 is still processing. After this time out, the remote I/O processor 9 and the host application processor 8 do not agree on the link state. Therefore, the stream has to be closed after a link timeout failure. The situation is similar to a timeout of the link request for a non-distributed STREAMS environment. However, the timeout is more likely to happen in a distributed environment where the connection to the remote I/O processor 9 might temporarily be down, where due to high traffic volume, the request does not get out in time, or where the response is delayed.

2.1 Distributed Protocol Stack on General Purpose Computer. The distributed protocol stack has components which reside on the general purpose computer and the distributed protocol stack depends on the AP processor 8 in the general purpose computer 7 to provide a STREAMS environment. One STREAMS is on an UNIX system in AP processor 8 while the other is on a real-time instantiation of STREAMS in I/O processor 9.

2.1.1 Distributed Protocol Stack Driver (media independent). Distributed protocol stack drivers in stack 12, running in the UNIX environment of AP processor 8, are responsible for establishing a connection with the remote real time environment of I/O processor 9. The AP processor 8 stack drivers link the media driver, exchanges some distributed protocol stack related protocol information with the remote side of I/O processor 9 and monitors the state of the media driver. The media driver is any reliable medium. The proxy driver establishes a bridge between the local STREAMS environments and the remote STREAMS environment. Its also coordinates the actions of the two STREAMS environments. The component also handles the translation of messages to formats which are understood by the remote and local environment.

2.1.2 Routing and Media Tables. The distributed protocol stack environment requires an internal table from which it can route user open request to remote environment. The routing information may specify an address pointing to a remote driver.

The media tables has all the important properties regarding the medium used to connect the two distributed protocol stack environments. These tables are ASCII files. Each individual media daemon process will configure the medium according to the parameter specified in this table.

2.1.3 Proxy Drivers. Each remote driver and remote module that is accessible by the local user process is associated with a proxy of this driver/module in the local environment. This component is called a proxy driver/module.

2.1.4 Porting. The porting of existing STREAMS I/O drivers from non-distributed streams environments is based upon the functions that the drivers provide in the general purpose non-distributed computer environment. I/O functions which could reduce AP processor usage (by not interrupting frequently) are the type of functions that are ported. Protocol processing which requires immediate acknowledgments, also benefits from being ported to the I/O processor.

In FIG. 2, an X.25 communication protocol stack running on a general purpose computer 7 is typical. The X.25 drivers and LAPB drivers do most of the protocol processing, error checking, etc. To improve the overall performance of the general purpose computer the X.25 drivers and the LAPB drivers that normally run in AP processor 8 are off-loaded to a specialized I/O processor 9. The distributed protocol stack allows the X.25 module along with the LAPB module to be moved transparently to the dedicated I/O processor 9. The processes running on the AP processor 8 continue to function in the normal manner.

2.1.5 Media Drivers. The distributed protocol stack environments need a reliable media to exchange data. A reliable media is one that guarantees that data transmitted reaches the remote side without any error. A media can be shared memory, VME bus, or an X.25 connection. The distributed protocol stack has no dependency on the media, except that it should be reliable. The media driver automatically reconnects when the media path breaks.

2.1.6 Multiple Media Support. The General Purpose Computer 7 can support multiple media concurrently. There is no limitation on the amount or type of media that can be active at a given time. The remote distributed protocol stack also supports the media.

2.1.7 Multiple I/O Processor Support. The distributed protocol stack can connect to multiple I/O processors via different media drivers concurrently. There is no resdriction on the number of I/O processors it can support.

2.2 Distributed Protocol Stack Files on General Purpose Computer. The distributed protocol stack drivers on the AP processor 8 side include the following files:
· *dsf*drv.c
   Links the media driver and sends all distributed protocol stack exchanges to the remote distributed protocol stack. This link is prior to the media being declared up and running. The media daemon links the media driver underneath the dsfdriver. The routing and media table are downloaded by the dsf_daemon and the respective media daemon(s).
· mirror.c
   Implements the distributed protocol stack protocol and acts as a proxy for the actual driver which is running on the remote distributed protocol stack.
· mirror.h
   Has the definition of all the private data structures used to operate the distributed protocol stack locally.
· *dsf*_daemon.c
   Brings up the distributed protocol stack STREAMS stack and downloads routing tables.
· media_daemon.c
   Downloads the media parameter and links the media to the distributed protocol stack driver.
· *dsf*_trace.c
   Trace program which captures all distributed protocol stack related messages sent over the media. The data is captured in binary format.
· *dsf*_format.c
   The binary data captured by dsf_trace is formatted to ASCII by this program.
· mr_route
   An ASCII file which has the routing information for each driver/module which run on the remote distributed protocol stack.
· mr_media
   An ASCII file which has important media related information. The AP processor distributed protocol stack uses this media STREAMS driver to communicate with the Remote distributed protocol stack.

2.3 Distributed Protocol Stack on I/O Processor. Distributed protocol stack provides the illusion of a STREAMS environment on top of a real-time operating system, allowing STREAMS drivers to be ported. A communications module links the STREAMS environment on the I/O processor with the STREAMS environment on the general purpose computer to give the impression of one unified STREAMS environment. Application programs on the geaeral purpose computer do not realize the distributed nature of distributed protocol stack.

2.3.1 Hardware Dependent Environment. The distributed protocol stack on the I/O processor depends on a real time operating system providing s preemptive scheduling. Other functions like timer interrupt should also be available for distributed protocol stack to run.

2.3.2 Core Streams. The STREAMS scheduler runs in one task (the STREAMS task). The STREAMS heads (either for a stream or an distributed protocol stack stream) run in separate tasks. They can also cause the STREAMS queues to be executed.

2.3.3 Distributed Protocol Stack Agents (User Process). Most of the processing in STREAMS takes place without the context of a user process. However some system calls like the opening or closing of STREAMS require this context. This code can contain a call to sleep() which stops this thread of execution for some time. As the main STREAMS processing takes place in one VRTX task, it cannot sleep. Therefore all the processing that potentially sleeps has to execute in the context of a separate task. These tasks are controlled by the distributed pmtocol stack agent.

2.3.4 Distributed Protocol Stack Protocol. Distributed protocol stack protocol consists of administrative and data messages. Administrative messages are used for opening, closing, pushing, popping, linking, unlinking STREAMS driver/modules.
· Remote Open
   Allows a remote user to open a STREAMS driver.
· Remote Push
   Allows a remote user to push a STREAMS module.
· Remote Close
   Allows a remote user to close a STREAMS driver.
· Remote Pop
   Allows a remote user to pop a STREAMS module.
· Remote Link
   Allows a remote user to link a STREAMS driver.
· Remote Unlink
   Allows a remote user to unlink a STREAMS driver.
· Flow Control
   Back pressure remote distributed protocol stack from sending data messages. This concept is similar to the caput function provided by STREAMS framework. The flow control protocol has the goal to reliably deliver messages from one stream component to the other, provide high throughput and little overhead. The reliability is based on sequence numbers and acknowledgments, the high throughput is achieved through the windowing scheme, and the protocol is parsimonious with ACK and NAK messages as well as window updates and does not require timers to ensure low overhead.
· Error recovery
   If the distributed protocol stack environment does not have enough memory it can throw out a data message. A nak administrator message is send to the remote side along with the sequence number. The remote side retransmits the dropped message again.
· Priorities
   Set the priority of a connection to a higher value than the base value.
· Synchronization and Recovery
   When a media reports an recoverable error, the communication module and the media driver try to reconnect and recover gracefully in a transparent manner.
· Negotiation
   The distributed protocol stack negotiate the version number, the data representation, the amount of active connection still pending, during initial bring up phase of distributed protocol stack.
· Reconnection Message Exchange
   After the open exchange is complete, an exchange of reconnect messages follows (if there are already open streams). Each side sends the ids of its open streams and the stored partner ids as well as the sequence number of the last messages received for each priority and the available window to the remote. Each reconnect request can only contain a limited number of ids, thus multiple reconnect requests might be necessary. Each reconnect request is responded to with a reconnect response that contains the list of streams that have no partner. This list can be empty. Only after this exchange is complete can other messages be sent. Every request has to get an response. Streams with no partner will be closed.
· Send ahead partial message
   When memory congestion level is reached partial data messages can be send to the remote side to store. The remote side will not send the message to the user until the complete message has been assembled.
· Dynamic Window Adjustment
   The window size allows the remote distributed protocol stack environment to send distributed protocol stack data messages. However, the value of the window size gets adjusted according to its use. If resources run out, the window sizes of all streams will be reduced (cut in half). If after some time (one second or so) resources are still not enough further reductions can be imposed up to a limit of one eighth of the original window size. If more resources become available the window size is increased again.
· Communication module
   Allows the connectivity between the partners of a distributed stream.
· Keep a live messages
   Sent by distributed protocol stack to check if the remote environment is active.
· Fragmentation
   In order to be independent of the maximum message size, a medium large messages can be fragmented. Fragmentation is only supported for data messages. It is assumed that the maximum message size of a medium is always larger than the largest possible administration message.

2.3.5 Multiple Media Drivers. The I/O processor 9 can support multiple media concurrently. There is no limitation on the amount of media that could be active at a given time.

2.3.6 Multiple General Purpose Computer Support. Each media path can be to different general purpose computer or to the same general purpose computer.

2.4 Distributed Protocol Stack Files On I/O Processor.
· adm55.h
   Distributed protocol stack specific file, administration driver.
· agent.h
   Distributed protocol stack specific file.
· calloc.h
   No modifications.
· clock.h
   Modified file. Contains lbolt declaration and function prototypes for timeout and delay functions.
· cmn_err.h
   Removed definitions that are not used from SVR4 file.
· conf.h
   Removed line discipline and terminal related stuff, modified the type struct cdevsw and struct fmodsw (see chapter on configuration).
· cred.h
   Removed crhold macro and the function prototypes that are not supported. · debug.h
   No modifications.
· ddi.h
   Modified file. Contains only supported things.
· devlist.h
   Special file used for configuring devices.
· dsf.h
   Contains distributed protocol stack type definitions that are shared between the AP processor and the I/O processor.
· dsf_obj.h
   Contains distributed protocol stack type definitions that are I/O processor specific.erroo.h Standard SVR4 defines of error codes.
· file.h
   Contains defines and function prototypes that are used for streams that originate on the I/O processor.
· ioccom.h
   No modifications.
· kmem.h
   Additional defines, types and prototypes.
· log.h
   No modifications.
· lstream.h
   Definitions for streams originating on the I/O processor.
· mkdev.h
   Contents unmodified.
· param.h
   Unnecessary code removed.
· privilege.h
   No modifications,
· proc.h
   Distributed protocol stack specific file. Not to be used by drivers or modules. · sad.h
   No modifications.
· secsys.h
   Removed not needed definitions.
· signal.h
   Kept only the definitions of the signals (for use by STREAMS drivers).
· stream.h
   Removed struct str_evmsg and included the GPC's link id in the last element of 1_pad□. No other modifications.
· strlog.h
   No modifications except that NLOGARGS is increased to 4 from 3.
· strmdep.h
   No modifications.
· stropts.h
   Removed event and file descriptor passing related definitions. No modifications.
· strstat.h
   No modifications.
· strsubr.h
   Modifications to struct stdata to remove non-supported features like event and signal processing. Added a distributed protocol stack specific field to the struct. No other modifications in the file.
· syslog.h
   No modifications.
· sysmacros.h
   Macros retain the same meanings. No modifications a driver or module writer needs to worry about.
· termio.h
   No modifications.
· termios.h
   Removed definitions not used by STREAMS implementation.
· told.h
   Removed definitions not used by STREAMS implementation.
· types.h
   No modifications.
· var.h
   · Removed all definitions not needed by distributed protocol stack.
· vmedrv.h
   Not used by distributed protocol stack, SVR3.2 specific driver.
· vmedrvshr.h
   distributed protocol stack specific file to communicate with the SVR3.2 base VME driver.
· vnode.h
   Distributed protocol stack specific header file. Not to be used by drivers or modules.

2.5 Library Functions. Besides the functions that make up the intrinsic STREAMS environment, STREAMS drivers can call other functions that are supplied by the UNIX kernel and therefore have to be supplied by the distributed protocol stack environment as well to make STREAMS drivers and modules portable. There are two groups of functions: library functions like strcpy(), bcopy(), or sprintf(), and secondly UNIX functions like sleep(), wakeup() and timeout(). The first group is supplied as a library together with the C-compiler.

2.6 Standard Drivers. Some STREAMS drivers come as part of the environment. If they are to be used, they need to be configured explicitly. The clone driver (necessary to define clone devices) functions in the same way as under SVR4.
· Log\ driver
   The log driver supports the strlog() function. A special trace command needs to be used that will talk to this remote log driver but otherwise works just the same as the standard trace.
· STREAMS Admin Driver
   Standard driver to do autopush and module name verification. The admin driver responds to admin requests. It also functions as a loopback driver that echoes the data sent to it on one stream to another.
· STREAMS Pass through module
   The pass through module is an example module that just passes data through unchanged.

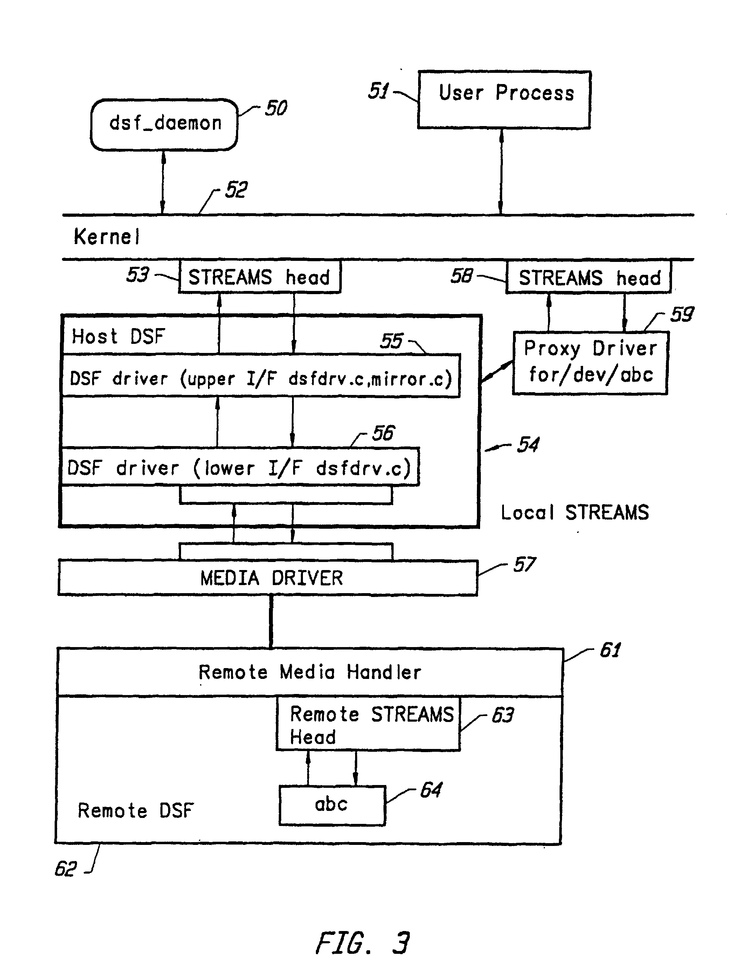

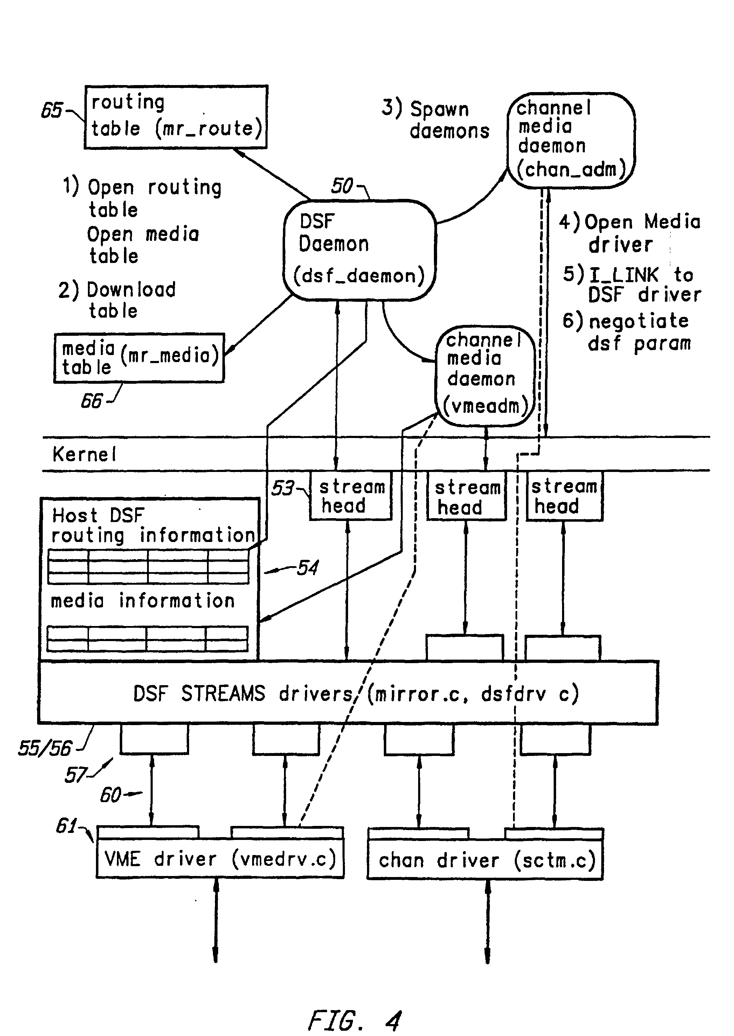

### Specific Embodiment - FIG. 3 and FIG. 4

3.1 Overview. In FIG. 3, a block diagram representation of the distributed communication facility of FIGs. 1 and 2 for a device 64 (*abc*) is shown. In FIG. 3, the local streams environment 54 runs on the application processor 8 of FIGs. 1 and 2 and the remote STREAMS environment 62 runs on dedicated I/O processor 9 of FIGs. 1 and 2. Two STREAMS media drivers 57 and 58 are provided to communicate over a physical channel 60 between the two DSF environments. The sctm.c STREAMS driver for application processor 8 is, in the embodiment described, for a UNIX SVR4/AMDAHL 390 Architecture processor. The vmedrv.c STREAMS driver for I/O processor 9 is, in the embodiment described, for a UNIX SVR3.2/AMDAHL 4655 I/O processor connected to a VME bus.

The major components of the distributed streams facility (DSF) are represented along with some user proxy driver/modules and actual drivers/modules in FIG. 3.

The DSF upper driver(dsfdrv.c) 55 is responsible for establishing a connection with the remote DSF environment 62. The DSF driver 55 links the media driver (sctm.c) 57 and the media driver (vmedrv.c) 61, exchanges DSF related protocol information with the remote environment 62 and monitors the state of the media drivers 57 and remote media handler 61.

The DSF driver55 (mirror.c) establishes abridge between the local UNIX STREAMS environment 54 and the remote STREAMS environment 62 and also co-ordinates the actions of the two STREAMS environments. The mirror.c component also handles the translation of messages to formats which are understood by the remote and local environments.

In FIG. 3, the proxy driver 59 represents the driver, actually located in the remote environment 62, in the local DSF environment 54. Proxy driver 59 is a stub and uses all the functions provided by the local (Host) DSF.

The dsf_daemon 50 is a daemon process which brings up the Host DSF in AP processor 8. It downloads a routing table 65 (see FIG. 4) into the Host DSF and spawns off the media daemons. These media daemons (chan_adm, vmeadm) link the STREAMS media driver underneath the DSF driver(dsfdrv.c).

3.2 Driver Routing Table(mr route). The DSF environment requires an internal routing table 65 from which it can route user open request to the remote environment 62. The touting information may specify an address pointing to a remote driver. This file(mr_route) resides in a well known directory (/etc/opt/dsf). The table set up phase consist of loading some routing information into the DSF drivers. This is done by the DSF daemon (dsf_daemon).

The routing table consists of the following information:

**TABLE 1.**

| Host DSF STREAMS driver routing table | | | |
|---|---|---|---|
| Device type | Host device name | Media value | Remote referral |
| c | /dev/dk/tty | OEMI 0f02 | tty |
| s | /dev/ad55 | OEMI 0f12 | adm55 |
| c | /dev/dlog | OEMI 0f22 | log |

The Device type identifies to the DSF drivers that the remote device referred in the host environment is either clone(c) or a normal(n) device. At system configuration time, the kernel 52 reserves a user-specified number of major numbers. Each major number is associated to a separate proxy driver 59. The remote reference consist of the actual driver name used by the remote configuration manager. This information is sent to the remote environment during an open request.

The Host device name is the name of the driver in the host environment. A full path is defined to access the driver and get relevant information.

The media value helps the DSF driver(mirror.c) 55 to bind with the remote environment 62. It's value type depends upon the media channel 60. The media daemon for each media makes up this value. The media value is a string, containing the media name followed by a space followed by a well differentiated parameter. This parameter is the first argument to the media daemon. The media value is also entered in the routing table field. Each driver, running in the remote environment, has to have a media value. This value helps the DSF drivers to locate the remote driver.

In the embodiment described, for example, an OEMI channel and VME bus are the media available on the DSF for channel 60.

The remote reference identifies the remote driver. The remote driver runs in a remote STREAMS environment 62 providing most of the functionality.

The table is down loaded into the DSF drivers by the DSF admin daemon (dsf_daemon).

3.3 Host Media Table (mr_media). The media table 66 (see FIG. 4) is an ASCII file consisting of the following fields:

**TABLE 2.**

| Host media table(mr_media) | | | |
|---|---|---|---|
| State | Admin Name | Media value | Parameter |
| a | /etc/chan_adm | 1a12 | <ppa> <blk> <command |
| | | | chaining> <data streaming> |
| a | /etc/vmeadm | 0 | <bsize> <no of blocks> |

The State defines if the media is to be linked under the DSF drivers. If the field state is active ("a"), then the dsf daemon will spawn the corresponding media daemon. If the field is deactivated ("d"), then the DSF daemon(dsf_daemon) continues looking at other records in the table.

The Admin Name identifies the path and the name of the communication administrative driver. The DSF daemon spawns this program, passing the Media value as the first argument to the program.

The Media value helps the DSF driver(mimor.c) to identify the path to the remote DSF environment. It's value depends upon the media type. This value is passed to the media daemon as the first argument. This is important, since the routing by the DSF driver depends on it.

More information is stored in the field Parameter. The value stored in this field is media dependent. For the channel driver(sctm.c), the value identifies the read channel address to which it is attached and the channel block size. The OEMI channel driver(sctm.c) also allows command chaining and data streaming options. These values are also passed to the media administrative daemon as arguments.

The values in the media table 66 can be changed at any instant. If a new daemon needs to be started, then a script file restart_media is invoked. This only applies for activating a particular media. For deactivating a given media simply send a SIGTERM to the appropriate media daemon. This will cause a graceful closing of the media to take place.

The media daemon(chan_adm.c, vmeadm.c) is responsible for downloading this table into the DSF driver(dsfdrv.c).

3.4 System Operations. The following components make up the Host DSF.

3.4.1. The DSF daemon (dsf_daemon) will help in building the stack. This stack helps a user to run their STREAMS based drivers in a remote environment. The daemon will load the routing table from "/etc/opt/dsf/mr_route" into the DSF drivers(dsfdrv.c). The DSF daemon will spawn all the communication daemons that will link the respective medium under the DSF drivers(dsfdrv.c). It does that, by opening a database file (/etc/opt/dsf/mr_media). This database file will contain a list of all the active communication daemons and its pertaining media parameter.

3.4.2. The communication media daemons (chan_adm and vmeadm) are responsible for successfully opening the communication media driver (sctm.c and vmedrv.c) and linking it under the DSF drivers(dsfdrv.c). The communication media daemons will load all media related parameters to the DSF drivers(dsfdrv.c). If the parameters are successfully loaded, the DSF drivers(dsfdrv.c) negotiate the DSF parameters with the remote environment. At this stage, the DSF drivers is ready to service the users on the local side.

All media related parameters are send by the DSF daemon(dsf_daemon.c) as arguments when the communication media daemon(chan_adm, vmeadm) is spawned.

Another function of the communication media daemons(chan_adm and vmeadm) is to monitor the media for critical failures. On critical failures, the communication media daemons(chan_adm, vmeadm) will try to relink the media driver(sctm.c, vmedrv.c) to the DSF drivers(dsfdrv.c).

3.4.3. The DSF functionality is implemented in the dsfdrv.c and mirror.c files. The DSF administrative and routing functionality is provided by a multiplexing driver (dsfdrv.c) which has a clone interface. It is responsible for maintaining the muting table (mr_route)information as well as maintaining the media related parameters. It talks with all the media daemons(chanadm, vmeadm). Multiple communication media daemons can connect to this driver and monitor the state of the media. In case of a media failure, this part of the DSF driver(dsfdrv.c) will pass a message up stream to the daemon(chan_adm, vmeadm).

3.4.4. The other part of the DSF functionality is provided by mirror.c. The DSF driver(mirror.c) establishes a bridge between two STREAMS environments and co-ordinate their respective actions. The component also handles the translation of the messages to formats which are understood by the remote environment. It provides a reliable mode of transportation of data. If the media breaks or the remote environment fails, the DSF driver(mirror.c) will try to recover the connections previously established. It coordinated with the dsfdrv.c for sending data to the remote side.

3.5 Trace Functions. The host DSF provides a means by which messages sent to the media driver(sctm.c, vmedrv.c) and received by the media driver can be captured and stored in file(s). A trace program(dsf_trace) invokes the trace functionality of the DSF drivers.

The syntax for invoking the trace functions is as follows:
dsf_strace -m<media name > -f < filename >

The "media name" is the value of the media whose trace functionality is to be invoked. The value is defined in the mr media table.

The "filename" is the path name and the name of the file where the raw data gets stored. The default value is "/etc/opt/dsf/dsf_trace".

Once the raw data is available, a format program(dsf_format) will convert the data into a format which will be able to be easily analyzed.

3.6 DSF Driver(mirror.c). Each remote STREAMS driver that is accessible by a local user process is associated with the proxy driver. The DSF driver(mirmr.c) along with the proxy driver, which is being remotely executed is configured in the local environment

3.6.1 Data Structures. The DSF driver(mirror.c) keeps track of each instance of an active connection via the following data structure.

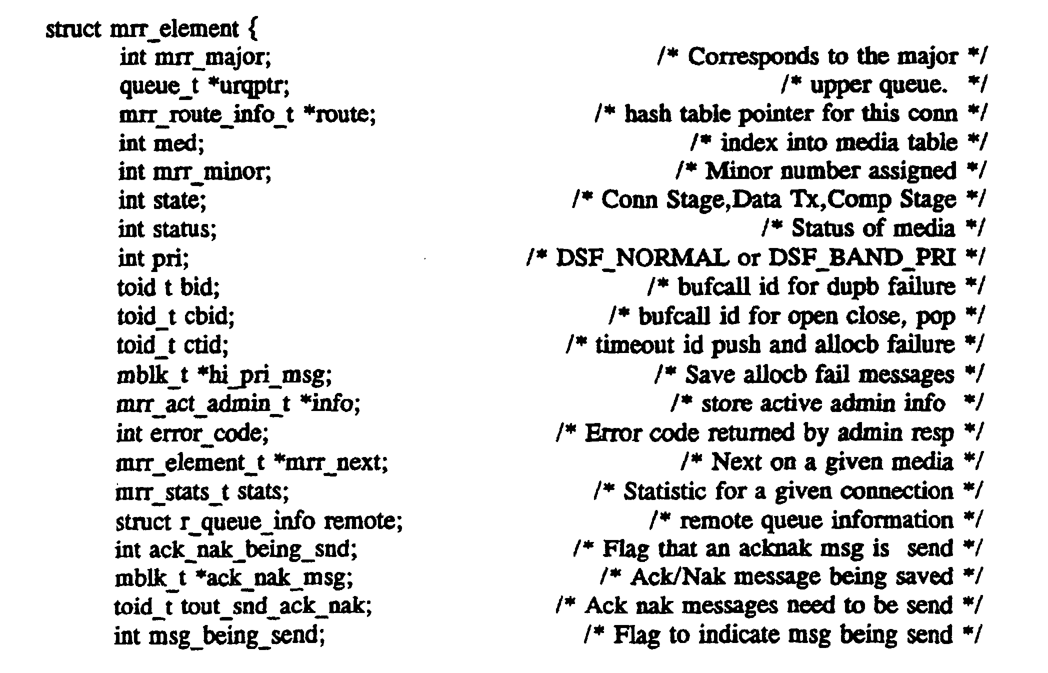

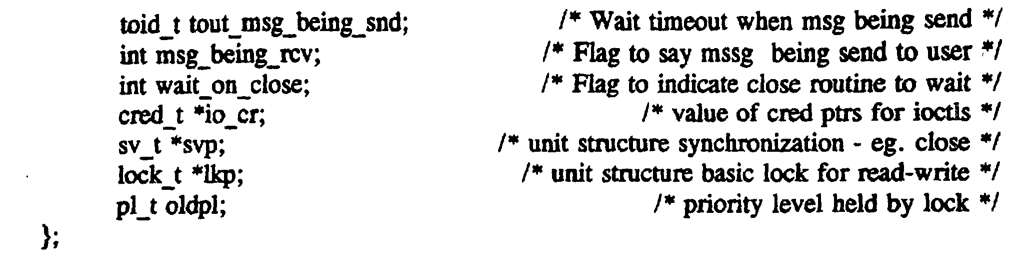

3.6.2 STREAMS Processing Procedures

3.6.2.1 Open Function(mrr_open). The open system call is directed to the DSF driver(mirror.c) open routine. The open routine will extract the information referenced by its major number from its routing table. In FIG. 3, a remote open system call occurs as follows. An open on a remote module is identified locally by the parameter sflag send during open. When the user process issues an I_PUSH ioctl, the stream head calls the modules open function with the sflag set to MODOPEN. The routing information specifies an address pointing to the remote driver environment 62. The open routine in the DSF driver (mirror.c) then makes an R_OPEN_REQ message for the remote environment 62 and sends it to the media driver 57. It then sleeps, waiting for the remote side environment 62 to respond. When the remote side sends an R_OPEN_RESP, the DSF driver(mirror.c) is notified. The DSF driver(mirror.c) then sends the response to the user process 51.

3.6.2.2 Close Function (mrr_close). The close system call is directed to the DSF driver(mirror.c) close routine.

Referring to FIG. 3, the close routine in DSF driver (mirror.c) makes an R_CLOSE_REQ message for the remote side and sends it to the media driver 57. It then sleeps, waiting for the remote side to respond. When the remote side sends an R_CLOSE_RES, the DSF driver(mirror.c) is notified. The DSF driver(mirror.c) then sends the response to the user process 51.

The stream head 53 calls the close routine of the DSP driver(mirror.c) when a user issues a I_POP ioctl. The close routine identifies, that the close is for a module and issues a R_POP_REQ to the remote side. When the remote side sends a R_POP_RESP, the DSF driver(mirror.c) is notified. The DSF driver(mirror.c) then sends the response to the user process.

3.6.2.3 Upper Write Put Function(mrr_uwput). The upper put function does standard processing for M_FLUSH messages, however for other message types it takes different action. If the message is an M_IOCTL type and of type I_LINK, I_UNLINK, I_PLINK or I_PUNLINK, then it sends an R_LINK_REQ /R_UNLINK_REQ message. Other types of messages are sent as "data messages" to the remote environment. The messages are however converted into the format defined. The DSF driver's put function queues the message if the media is down temporarily or the remote queue has asserted flow control.

3.6.2.4 Upper Write Service Function (mrr_uwsrv), The upper write service function of the mirror does standard service routine processing. If the remote queue is blocked, or the media is blocked then the messages are not processed. Otherwise the same processing as in mrr_uwput is done.

3.6.2.5 Lower Read Put Function (mrr_lrput). This function accepts data messages from the media driver 56 and parses it for all types of messages. Messages received are either DSF_ADMIN or DSF_DATA. On data messages of type DSF_DATA, the function allocates a message block, copies the data into the message block and sends it immediately to the user. In case of allocation failure, the data is discarded and the remote side is informed.

The function also interacts with the DSF admin driver. All DSF related messages are sent to the admin stream.

3.6.2.6 Lower Read Service Function(mrr_lrsrv). The lower write service function forwards all queued message, if the queue is not blocked to the upper stream.

3.7 DSF Administration and Configuration Driver (dsfdrv.c).

3.7.1 Data Structures. The DSF driver maintains a media structure for all active media. The data structure is as follows.

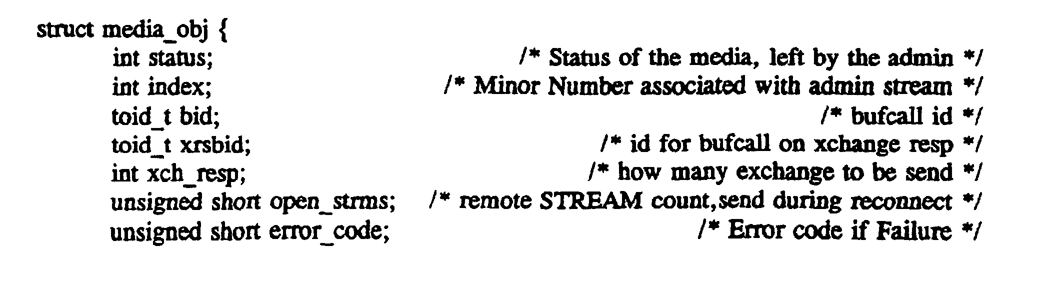

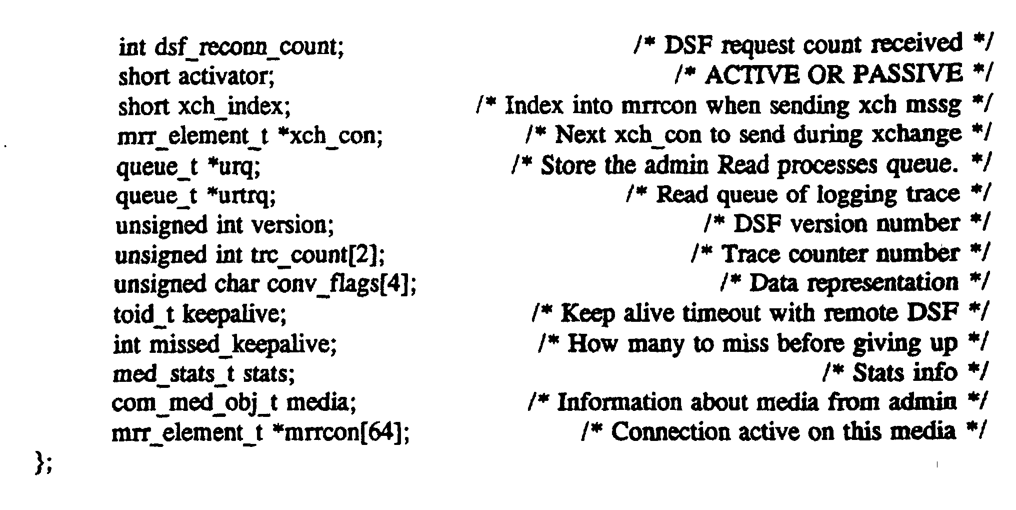

3.7.2 Processing Functions. The DSF driver(mirror.c) can only be used once the DSF environment is brought up. The user brings up the DSF environment with the help of the DSF daemon(dsf_daemon.c), the media daemon(chan_adm.c and vmeadm.c) and the routing(mr_route) and media(mr_media) tables.

The DSF driver(dsfdrv.c) provides a clone interface. This allows multiple media daemons to open connections and download appropriate information.

The functions offered by the DSF driver(dsfdrv.c) pertain to activating the proxy driver. All proxy drivers are considered "activated" after the following functions are successfully performed.

The functions are:
Downloading the routing table;
Opening a connection with the media driver (sctm.c, vmedrv.c, etc);
Linking the media driver underneath the DSF driver(dsfdrv.c);
Downloading the media information(mr_media);
Exchanging DSF protocol related information(dsfdrv,.c).

Once these operation are done, the proxy drivers are available to communicate with the remote environment.

3.7.2.1 Downloading the Routing Table. The program responsible for downloading the routing table 65 is the DSF daemon. The DSF daemon (dsf_daemon) 50 first gets the routing information from the routing table(mr_route). The routing table (mr_route) exists in the /etc/opt/dsf/ sub-directory in memory 13 of FIGs. 1 and 2. The DSF daemon opens a connection to the DSF driver(dsfdrv.c) 55 and issues an MR_ROUTE ioctl to the driver. If the download is successful then the DSF driver 55 will send a positive reply(M_IOCACK).

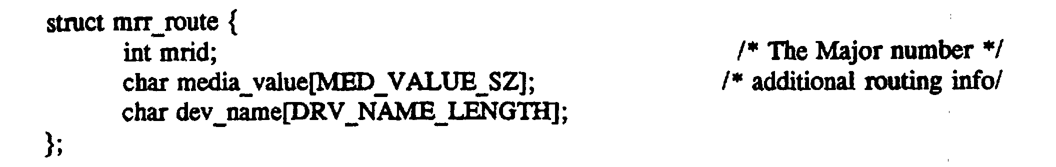

The "mrid" indicates the major number of the device supported in the DSF environment.

The "media_value" indicates the media type. The media type identifies the reliable protocol to be used from a local host environment 54 to a remote environment 62.

The "dev_name" identifies the media name to the remote streams environment 62. This value is sent during the exchange of information between the local and the remote environments.

3.7.2.2 Opening a Connection With the Media Driver. The DSF daemon-(dsf_daemon) 50 will spawn media daemons(chan_adm, vmeadm) which have been activated. To activate an OEMI channel media, an entry in the /opt/dsf/mrr_media file is created and marked as active. If the channel has been activated, then the channel media daemon(/opt/dsf/sbin/chan_adm)process will be spawned by the DSF daemon(dsf_daemon).

The DSF daemon will pass all related parameters to the channel admin daemon via command line arguments. The channel media daemon will open a connection with the actual media driver(in this case the sctm STREAMS driver). Each media driver(sctm.c) will have its own interface. To bind with the channel at a given media value, an attach request is sent, before a LINK can be issued on the mirror administrative driver.

3.7.2.3 Linking the Media Driver Underneath the DSF Driver. Once the media driver has been successfully opened and bound to a given media value, the next step is to issue an I_LINK to the DSF driver(dsfdrv.c). On a successful I_LINK the DSF driver will send an M_IOCACK to the daemon(dsf_daemon).

3.7.2.4 Downloading the Media Information. The media daemon(chan_adm) is responsible for loading the media related information to the DSF driver(dsf_drv.c).

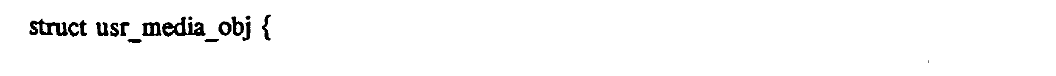

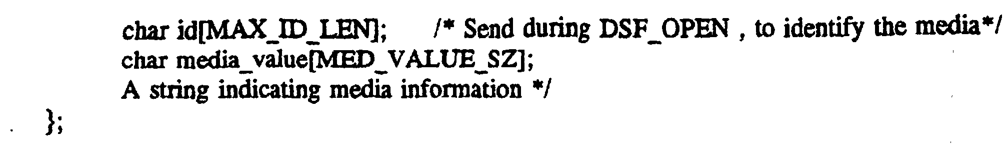

The "id" contains the id of the media. It has to be unique. In case a connection breaks the id is used to reconnect the remote stream components. It is an ASCII string consisting of the name of the media used (like "OEMI channel", "tcp", etc) followed by a space and a media specific address like the (sub)channel number or the internet address of the originator.

The "media_value" gives more information about the media. For the OEMI channel it identifies the channel address, the board no and the block size to use.

3.7.2.5 Exchanging DSF Protocol Information. Once the media related parameters are downloaded, the DSF driver(dsf_drv.c) issues a DSF open request to the remote environment. This is only if the host side is to be the activator of the media. If the host is responsible for bringing up the media, the DSF driver(dsfdrv.c) will pass a open request to the remote side.

The response to this open response is another open response message so that both sides agree about the state of the connection.

After the open exchange is complete, an exchange of reconnect messages might follow. Each side sends the ids of all its open streams and stores the partner ids as well as the sequence number of the last message received for each priority and the available window to the remote. Each reconnect request can only contain a limited number of ids, thus multiple reconnect requests might be necessary. Each reconnect request is responded to with a reconnect response that contains the list of streams that have no partner. This list can be empty. Only after this exchange is complete can other messages or data be sent. After this operation is successful, the media is put in a state where messages between the two remote STREAMS environments can take place.

3.7.2.6 Closing the Media Driver. The media driver(sctm.c, vmedrv.c) can be closed either from the host side or the remote side. In case the remote side encounters a fatal error, it sends a DSF close request message. The DSF STREAMS driver(dsfdrv.c) responds by sending a DSF close response to the remote side. The DSF driver(dsfdrv.c) send an M_HANGUP STREAMS message up the media daemon(chan_adm.c) queue. The media daemon(chan_adm, vmeadm) will then close all the file descriptors. This will cause the media driver underneath to be unlinked. However, before unlinking, the DSF STREAMS driver will issue an M_HANGUP STREAMS messages to all the active connections on the given media.

3.8 Configuring the DSF Drivers(dsfdrv.c minor.c).

3.8.1 Configuring the DSF Drivers for UNIX SVR 3.2. This section covers the UNIX SVR 3.2 DSF driver (dsfdrv.c, mirror.c) and master configuration only.

The facilities provided by the DSF environment can be utilized after the configuration of the DSF drivers has been done correctly. This configuration has two steps. The first is the configuration on the I/O processor 9. The second part consists of configuration on the UNIX SVR 3.2 side in AP processor 8.

3.8.1.1 UNIX SVR 3.2 Driver Configuration. On the UNIX SVR 3.2 side the DSF drivers and the media driver(vme, ctm STREAMS based) need to be included in the UNIX SVR 3.2 kernel 52.

In UNIX SVR3.2 a devicelist(4) file exists in the /etc/directory. This devicelist(4) defines the device types and the system configuration specification.

The DSF drivers manage the device type dsf. The syntax for describing the device is defined in the devicelist file:
[device-type] [address(es) and/or other information]

The dsfdrv.c, dsf.h, mirror.c, dsf.h and the mirror.h files are stored in the /usr/src/uts/uts/io/dsf directory.

For a SVR 3.2, there is only one file in configuring the DSF and mirror driver:
Master(4) format
This master(4) files are in the master.d directory under the name of DSF and minor.
The master configuration file for DSF and mirror are maintained in the directory /usr/src/uts/tpix/32/master.d/. There formats are as follows:

### [1] DSF Driver Description Section.

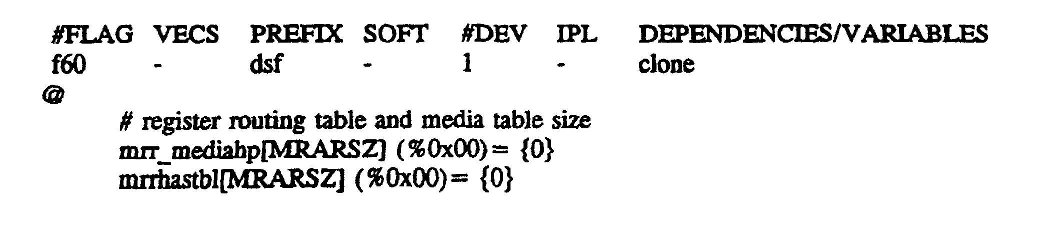

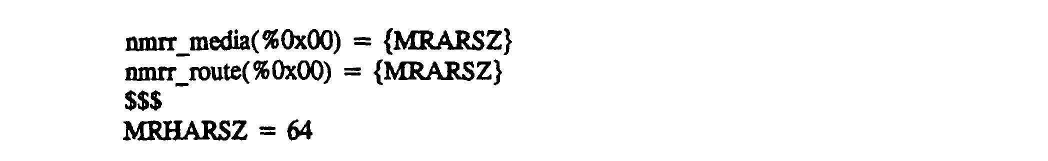

FLAG - "f' specifies that DSF is a STREAMS driver. 60 is some arbitrary major number assigned, it can be any major number.
PREFIX - "dsf" uniquely identifies the DSF driver and is propounded to the DSF driver routines and variables.
DEPENDENCIES - The DSF driver interfaces with the clone driver.
The Proxy driver interfaces with the DSF driver.

### [2] Device Information Section.

The above example shows the variable definitions for the DSF driver:
# DSF driver variable definitions section
mrr_mediahp[MRARSZ] (0x00)
mrrhastbl[MRARSZ] (%0x00)
where MRARSZ defines the size of the array.

The DSF driver(mirror.c) has no variable dependencies.

3.8.2 Configuring the DSF Drivers For UNIX SVR4. This section covers the UNIX SVR4 DSF driver(dsfdrv.c) and the mirror(mirror.c) configuration only.

The facilities provided by the DSF drivers and proxy driver can be utilized after the configuration of the DSF drivers and proxy drivers has been done correctly. The second part consists of configuration on the UNIX side, the AP processor 8.

3.8.2.1 UNIX SVR4 Driver Configuration. On the UNIX side for the AP processor 8, the DSF drivers and the base STREAMS based sctm.c driver need to be included in the UNIX SVR4 kernel 52.

In order to overcome the major drawbacks of the UNIX SVR3.2 config(1M), UNIX SVR4 configuration tools provide an extensible and flexible mechanism for configuring device drivers and software modules.

In addition to devicelist(4) which defines the device types and the system configuration specification, a configuration database master(4) file which contains the relevant configuration information for the associated driver or modules is also included in the system.
Master(4) format

This master(4) is a master.d file
The master configuration file (dsf.cf) is maintained in the DSF drivers directory /usr/src/uts/uts/io/dsf
Two configuration sections are implemented for the DSF and mirror master files which are driver description, device information and driver variable definitions

### [1] Driver Description Section.

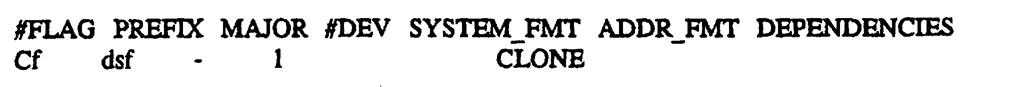

FLAG - "C" specifies that the DSF is a clone driver. It will generate a special file as specified in the _CLONE_FMT for clone driver related operations to the DSF driver.
"f" specifies that DSF and mirror are STREAMS drivers.
PREFIX - "dsf" and "mrr" uniquely identifies the DSF driver and proxy driver and is propounded to the driver routines and variables.
MAJOR - "-" defines that the DSF driver will be assigned an unused major number by UNIX SVR4 drvinstall(1M) command.
#DEV - "1" indicates that one minor is to be created for each device entry.
DEPENDENCIES - DSF driver interfaces with SCTM driver and thus SCTM must be included for configuring the DSF driver.

Since the DSF driver is also a CLONE driver, "clone" also needs to be present. The proxy driver interfaces with the DSF driver and thus must be included for configuration.

### [2] Device Information Section.

This section contains all of the device-specific information, such as device types managed by the driver as well as the special device files to be created for each device type.

The following is an example of the master file for the DSF driver:
dsf:0644:0
_CLONE_FMT ={ "dsf" }
   @
"@" is the symbol that ends this section.

### [3] Driver Variable Definitions Section.

This section replaces UNDO SVR3.2's space.h and it generates all non-static external variables required by the driver. The following is an example of variable definitions for the DSF driver:
# DSF driver variable definitions section
# -- #C1 is the total number of media configured for /dev/dsf entries
#
mrr_mediahp□ (%1)
mrrhastbl□ (%1)
#
# more information may be added in here for
# non-static data used by DSF driver

3.8.3 DSF Driver Source Directory. In UNIX SVR4, the kernel source and header files have to reside in the same directory.

The directory /usr/src/uts/uts/dsfwill contain the DSF driver source and related header files.

All the DSF driver related header files will be installed in /usr/include/dsf.

3.8.4 DSF Driver Source Directory. In UNIX SVR4, the kernel source and header files have to reside in the same directory.

The directory /usr/src/uts/uts/dsfwill contain the DSF driver source and related header files.

All the DSF driver related header files will be installed in /usr/include/dsf.

3.9 Performance. The host based DSF STREAMS driver presents a high level of performance and allocates minimal overhead in processing all messages from the remote environment 62. The inter-processor message passing mechanism is reliable with a high throughput with minimum overhead. In the multiprocessor embodiment, "put" is avoided if the message can be directly "put" on the next queue.

3.10 Create a Proxy Ddriver in the Host DSF Environment. The purpose of the DSF environment is to allow the STREAMS driver/module to run in a remote STREAMS environment without major modifications to the driver/module code. This is a two step procedure. The first step is to configure your driver/module in the remote STREAMS environment.

The second step is to configure your driver in the native environment. The STREAMS driver/module has to be configured in the way defined into the native operating system.

3.10.1 Creating the Source File. The proxy driver will emulate your driver. However you have to create a source file which has the stream tab structure defined in it. This file replaces your driver/module file in the native environment.

An example of a proxy driver for the "tty driver" is explained below:

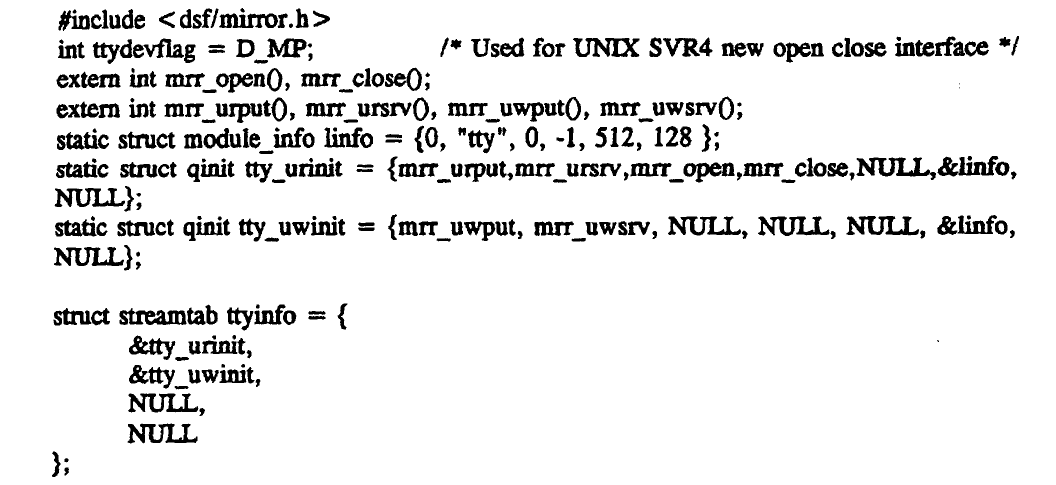

All the mirror functions are defined as external functions. The module_info has to be defined according to your driver/module requirements. The elements of the qinit structure are filled with the appropriate DSF driver(mirror.c) functions.

This file then replaces the driver file in the appropriate directory.

The kernel is build and the driver is configured and ready to run.

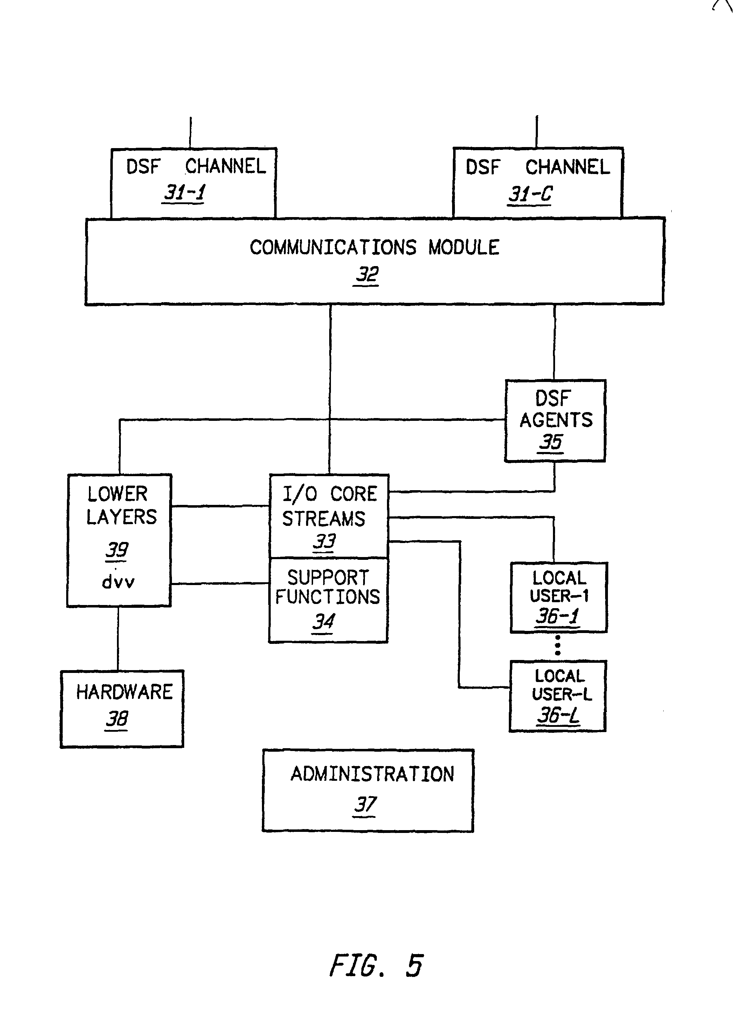

### DSF On I/O Processor - FIG. 5.

In FIG. 5, the major new components of the I/O processor 9 with the DSP facility implemented on top of a Real-Time OS are shown. The components include the communication module 32, the DSF agents 35, the I/O core STREAMS 33, the standard drivers 40, the standard header files 41, the support functions 34, the local STREAMS interface 42, the configuration files 43, the administration 37, and the hardware 38.

The communication module 32 provides the connectivity to remote STREAMS environment including error recovery. The DSF Agents 35 handle requests like open, close, push, etc. that in the UNIX STREAMS environment have a user process context. Core STREAMS 33 is an implementation of all SVR4 STREAMS functions in I/O processor 9. Standard header files 41 are little modified UNIX header files to be included by DSF and STREAMS drivers. Standard Drivers 40 consists of the clone, autopush, and log driver. Support functions 34 are implementations of non-STREAMS functions commonly used by STREAMS drivers like (kmem_alloc(), timeout(), sleep(), etc.).

It is possible to have streams originate on the I/O processor using the local STREAMS interface 44 which contains functions like open(), read(), getmsg(), etc.

The configuration component 43 consists of tables to define drivers and modules, a vnode table and a simple file table for the local STREAMS interface.

The administrative component 37 is not directly a part of the STREAMS environment. It allows an administrator to intervene in the running of the DSF or look at statistics and change tuning parameters.

5.1 I/O Core Streams. The STREAMS scheduler runs in one task (the STREAMS task) - implemented in strsubr.c. The STREAMS heads 53 or 63 (either for a local stream - implemented in lstreamio.c - or a remote DSF stream - implemented in streamio.c, respectively) run in separate tasks. They can also cause the STREAMS queues to be executed. There is no concurrency problem, however, as there is no preemption of one task by another task. Only interrupts can preempt the execution of a task. The task can protect itself against interrupts during critical regions by disallowing interrupts. After an interrupt is serviced the same task will continue executing. All tasks (STREAMS task, agent tasks, the DSF read tasks and user tasks) except for the admin task run at the same priority in a round robin fashion. The admin task has highest priority.

All SVR4 STREAMS functions are supported and work in the same way as defined in UNIX SYSTEM V RELEASE 4: Programmers Guide: STREAMS (implemented in stmam.c and strsubr.c).

The following difference exists however. It is possible for the link request to time out on the host side, while the remote side (I/O processor 9) is still processing it (and might even complete it successfully). After such a time out, the remote and the host side do not agree on the link state. The stream has to be closed after a link timeout failure. The situation is similar to a timeout of the link request for a non-distributed STREAMS environment. However, it is more likely to happen in a distributed environment (the connection to the remote might temporarily be down, or due to high traffic volume the request does not get out in time, or the response is delayed).

5.2 DSF Agents. Most of the processing in STREAMS takes place without the context of a user process. However some system calls, for example, the opening or closing of Streams, require this context. This code can contain a call to sleep() which stops this thread of execution for some time. The STREAMS scheduler and the communications modules are shared between all users and therefore cannot sleep. All the processing that potentially sleeps has to execute in the context of a separate task. These tasks are called the DSF Agents or just agents and are implemented in agent.c.

Whenever a request that requires user context is received, an available agent task will execute it, or if none is available, a new one will be forked as long as the maximum number of agents is not exceeded. If no more agents can be forked, the request will be queued. After an agent task is done (including the sending of a response), it is available for the next request (the task does not die unless more than half the maximum number of tasks are idle). The maximum number of agent tasks is a configurable variable. One current value is 10.

A synchronization mechanism ensures that requests for one stream will be processed in the order in which they were received, one after another.

5.2.1 Details of Agent Processing. A request for an agent (open, close, push, pop, link or unlink) is submitted to the agents in form of a struct proc_req as defined in the following section. The function msg_to_agent (in chanhead.c) takes care of this. After allocating a proc_req structure and filling in the appropriate information the function submit_proc_req (in chahead.c) is called which looks for an agent to process the request. First the function checks whether an agent already works on a request for the same stream, and in that case appends the new request to the its requests. Otherwise the first idle agent will process this request. Idle agents are contained in the idle_list. If the list is empty, a new agent may be forked. If no agent is available and no new agent can be forked the request is queued in delayed_proc_req.

5.2.2 The Format of the Requests. Each request that is passed to an agent is of type struct proc_req defined in agent.h.

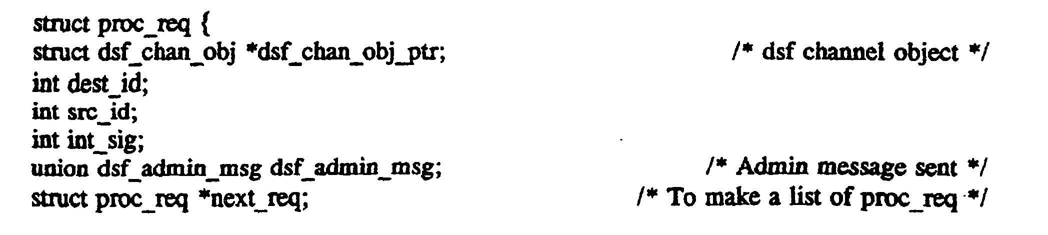

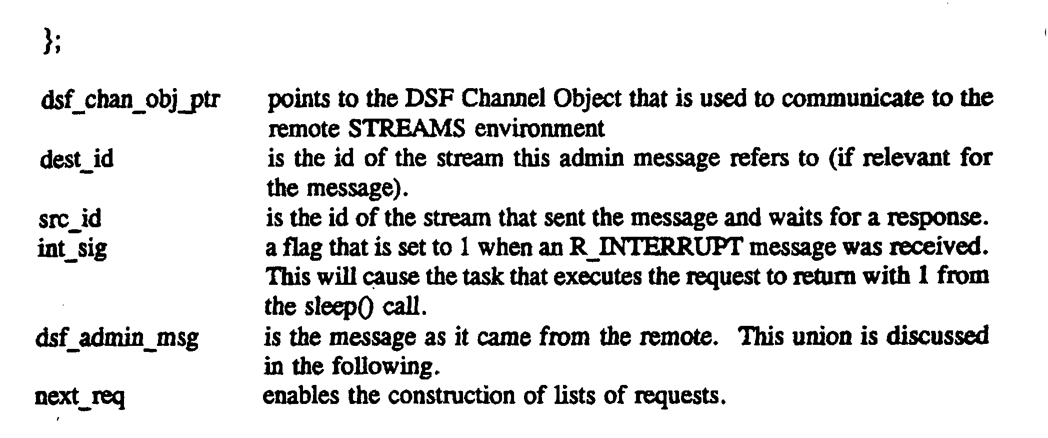

Note that the proc_req structure is allocated using alloc_proc_req() (implemented in agent.c) and has to be freed by the task that services the request with free_proc_req() (also in agent.c).

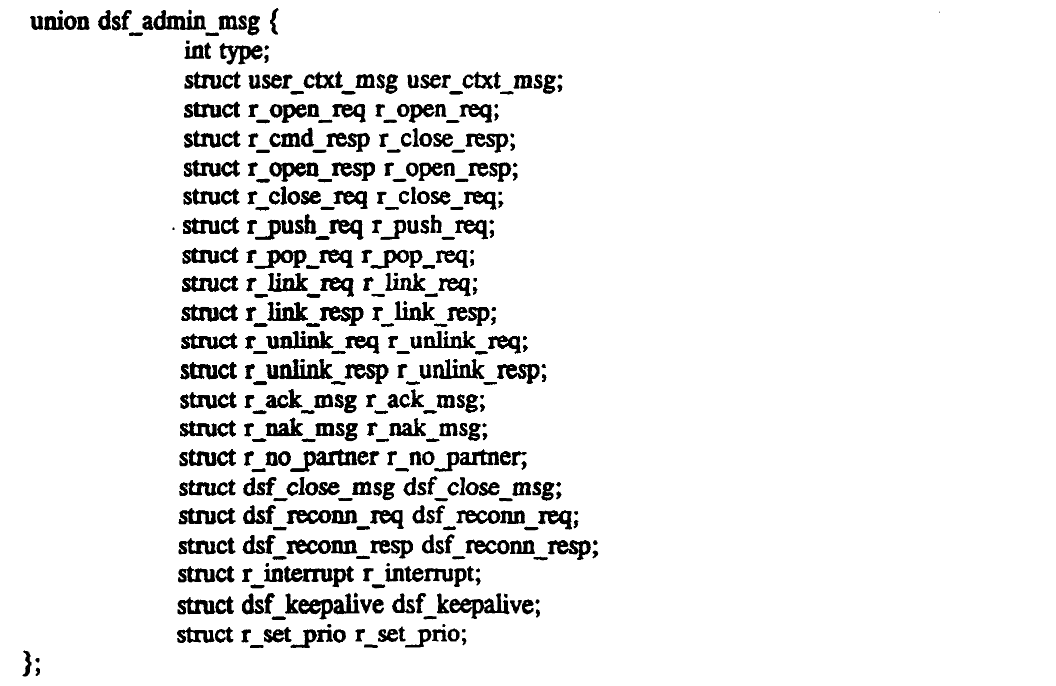

This structure and all its sub-structures explained below are all defined in dsf.h. The admin message begins with a type field that is shared between all members of the union. The agents only process r_open_req, r_close_req, r_push_req, r_pop_req, r_link_req and r_unlink_req. Admin messages of another type are ignored by it. All agent-processed request messages have sequence numbers. All response messages except for the r_close_resp have also sequence numbers.

These request messages also all contain user context information (struct dsf_cred user_cred - defined in dsf.h). This struct has maximum size of possible sizes of a struct cred (as defined in the standard cred.h) that is locally used for user credentials, i.e. struct dsf_cred is identical to struct cred except for the size of the last element (the array cr_groups□) that contains one element in struct cred and 32 (NGROUPS_UMAX) elements in struct dsf_cred.

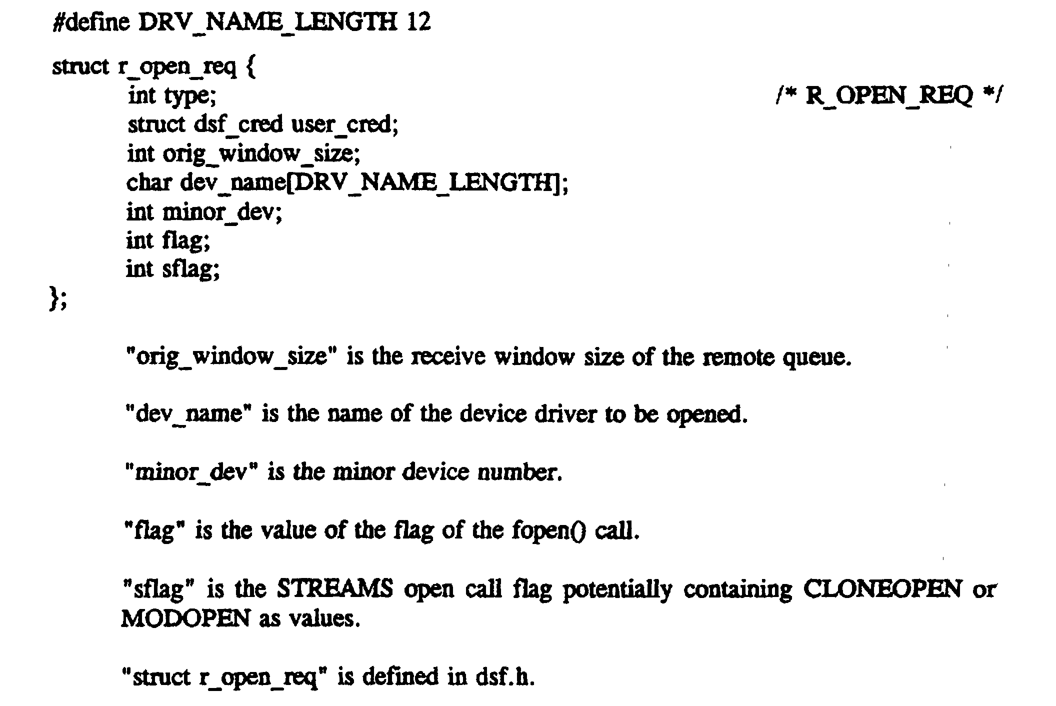

The processing of the open request is implemented in the file agent.c. As part of the open processing, the standard function stropen gets called (file streamio.c).

The response to the open request (implemented in agent.c) is of type

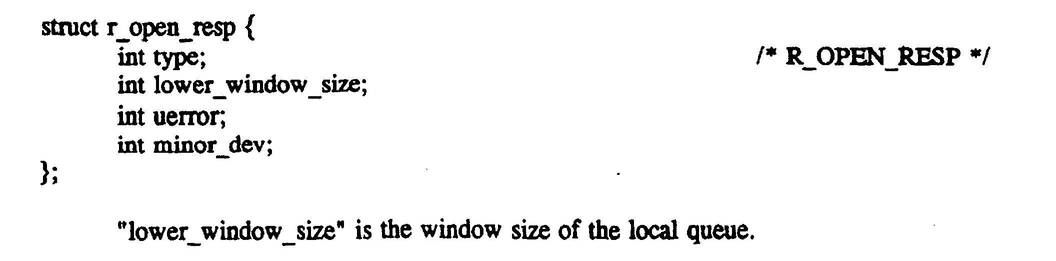

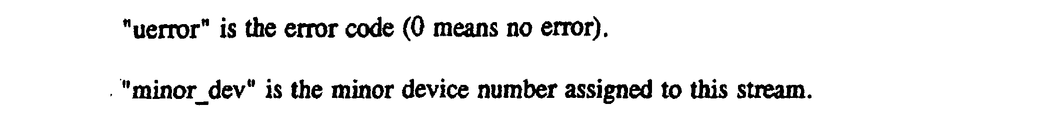

The close processing is implemented in agent.c with a call to closevp in close.c which in turn calls delete_vnode in vnode.c.

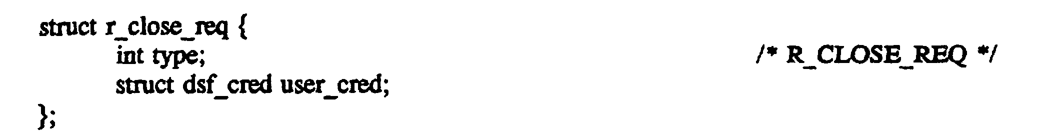

The response to a close request is sent in a struct r_cmd_resp that only contains the error code of the operation:

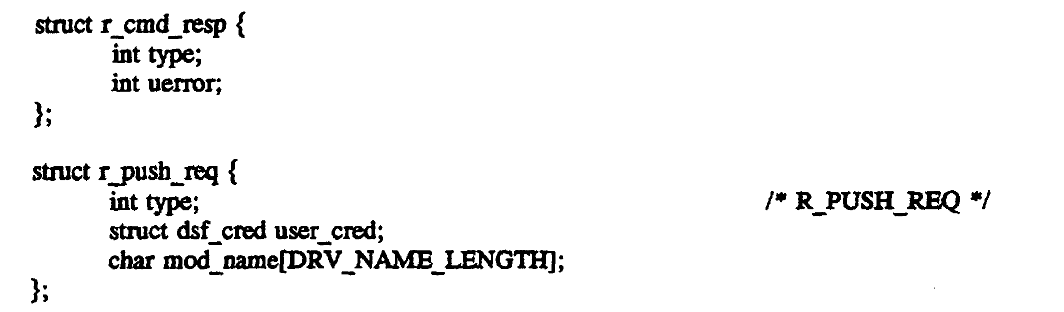

The push request contains mod_name (the name of the module to be pushed). The response to the push request is of type struct r_cmd_resp. The implementation is in the files agent.c and module.c.

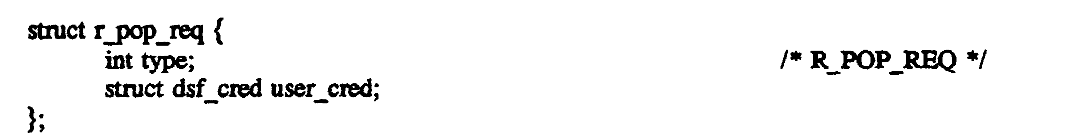

The pop request results in the top module to be popped. The respoase to the pop request is of type struct r_cmd_resp. The implementation is in the files agent.c and module.c.

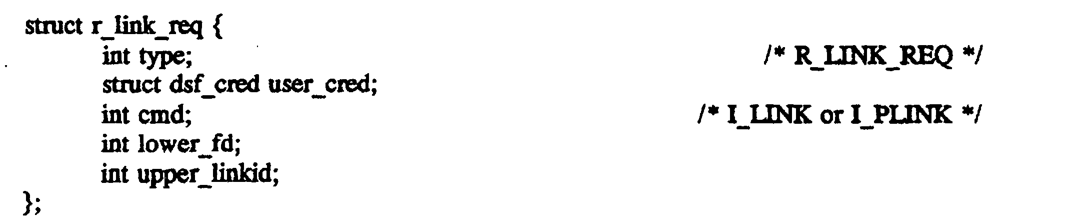

The link request contains the id of the lower queue (lower_fd) to be linked, cmd which contains the information whether it is a permanent link or not, and the link id on the host (upper_linkid). This link id will be passed to the driver for identification (rather than the I/O processor 9's link id).

As link ids have to be unique in a given environment, the I/O processor 9's STREAMS environment cannot use the AP processor 8's link id, because there could be multiple hosts talking to the same I/O processor 9. But user programs and drivers have to use the same id, so the host 8's link id is passed to the driver, but internally the I/O processor 9's STREAMS environment uses its own link id. In case an unlink gets generated locally (by a strclose() for example), the local STREAMS environment needs to send the remote link id to the driver in the I_UNLINK message. Therefore, the host's link id is stored in the linkblk data structure. This structure is a modification to the standard SVR4 linkblk data structure.

The link processing is done in the files agent.c and driver.c

The response to a link request is a link response:

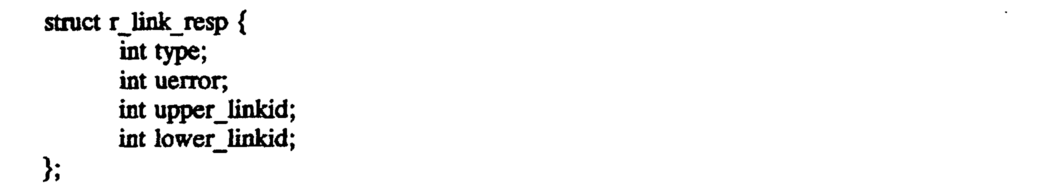

The link response contains uerror (the error code), upper_linkid (the link id sent from the host) for identification, and if it was successful, the id of the link on the I/O processor 9 (lower_linkid) to be used with the unlink request.

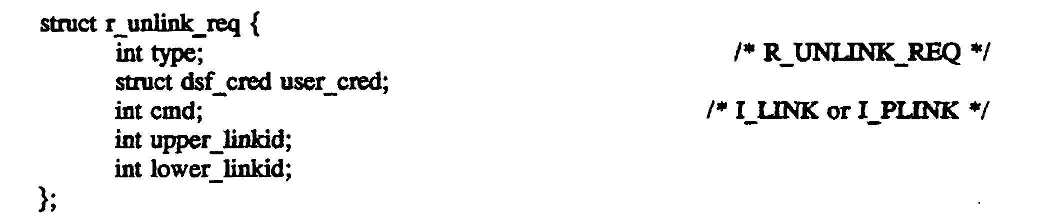

The unlink request contains the indication whether it was a permanent link (cmd), the upper_linkid (link id on the host) that will be returned in the r_unlink_resp for identification, and the lower_linkid that was returned by the link response. The response to an unlink request is of type struct r_unlink_resp.

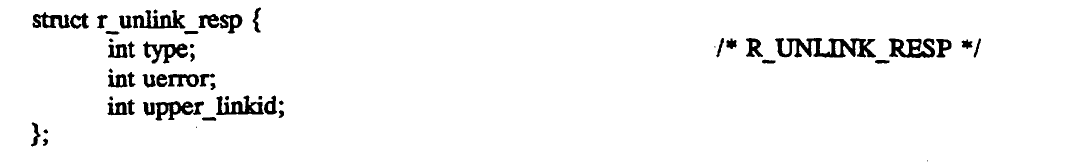

The unlink response contains the error code for the request (uerror) and for identification the link id of the host (upper_linkid).

The unlink processing is done in the files agent.c and driver.c

### 5.3. COMMUNICATION MODULE.

5.3.1 Overview. The communication module provides the underlying connectivity between the AP processor 8 and the I/O processor 9, the partners of a distributed stream. The media of communication can be any reliable data medium type like an OEMI channel, shared memory, TCP, X25, etc. The media appears as an object called DSF channel object. The communication module does not have to know what kind of media is used.

This module is implemented in the file chanhead.c and chanadmin.c.

A task is assigned to each channel. It reads the messages and routes them to the DSF Agents, if they require user context, or to the right stream, if it is a normal STREAMS message. Some administrative messages (like the close channel or an ACK message) are handled by the task itself.

If a connection breaks, it reconnects. Distributed streams over a broken channel can be reconnected after the underlying DSF channel gets reestablished.

The communication module also handles flow control, and in the future will translate between different data representations on both sides of the channel.

5.3.2 Definition of the DSF Channel Object. The following data structure defines a DSF Channel Object (in file dsf_obj.h):

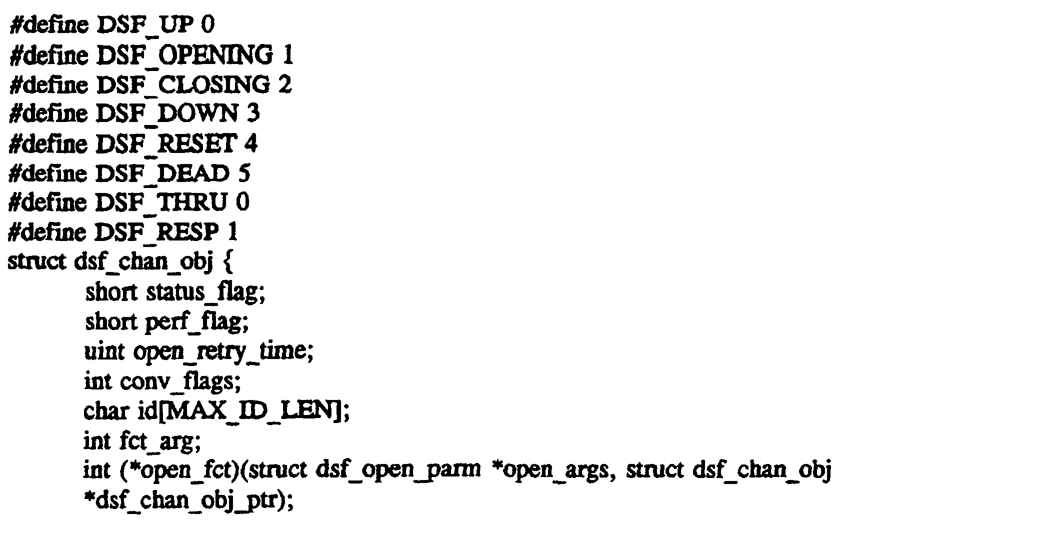

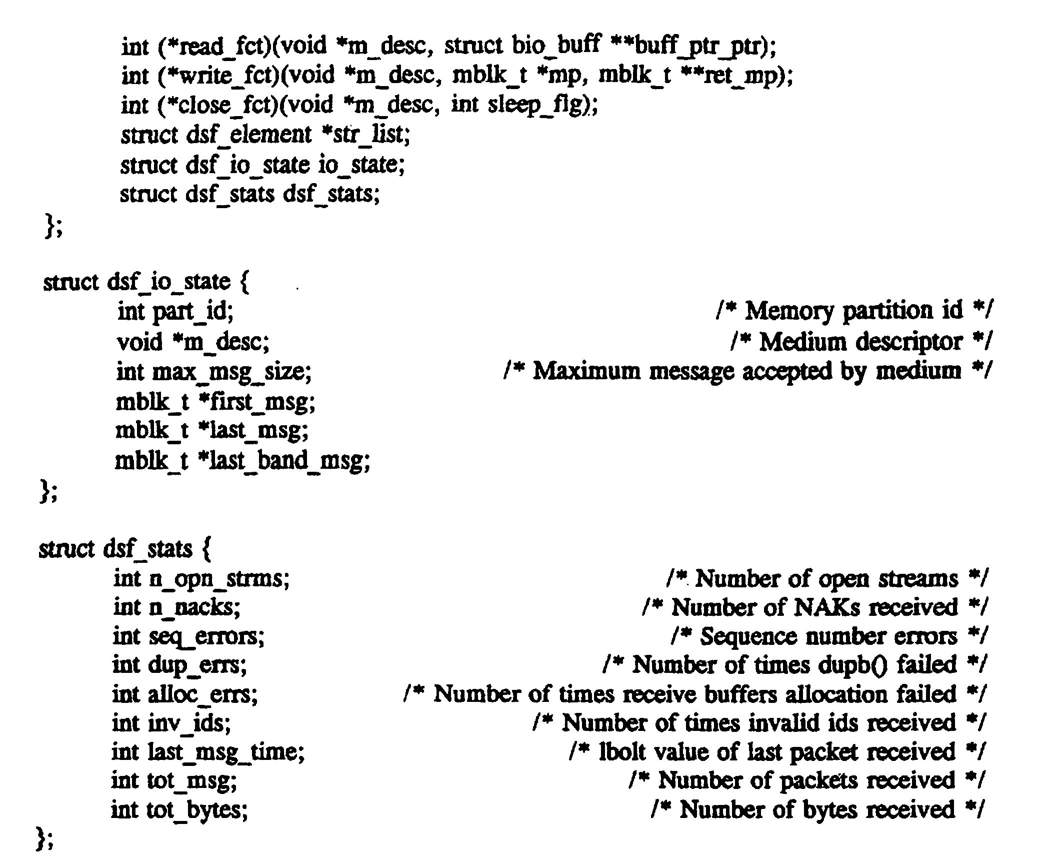

"status_flag" is the status of the medium (DSP_UP, DSF_OPENING, DSF_CLOSING, DSF_DOWN, DSF_RESET or DSF_DEAD).

"DSF_UP" means the medium is open (the open message exchange may not have completed though).

"DSF_OPENING" means the open function is pending, "DSF_CLOSING" indicates that a close request has been sent (or received). "DSF_DOWN" means that temporarily the connection to the remote has been broken. "DSF_RESET" means the media has been closed locally, but will be coming up again. "DSF_DEAD" means the object no longer exists. It will be deallocated, when all its streams have been closed.

"perf_flag" used to indicate whether throughput is favored over response time (DSP_THRU) or the other way around (DSF_RESP).

"open_retry_time" is the number of seconds of delay between a failed open and a retry. This value is set locally depending on the medium.

"conv_flags" are the data conversion flags for partners of the medium that have a different data representation (not defined yet).

"id" is a string that contains the unique identification for a channel. It is sent in the first message by the side that does the active open after the connection is established (among other things). It is used for reconnection after a temporary disconnect

"fct_arg" is an identifying argument for the I/O routines.

"open_fct" is used to establish a connection. This can be done in an active or passive way. Active means to connect to the other side which is listening, passive means to wait for the other side to connect. The type struct dsf_open_parm is defined in the next section. If the open function returns with failure, one should retry if it was an active open. If it was a passive open the failure is fatal, and no retries will succeed.

"open_args" are the media dependent arguments of the open function. The return value of the open_fct will become fct_arg, if it is not -1.

"read_fct" reads data into a buffer it allocates and returns the number of bytes read. This buffer should be deallocated as soon as possible, as usually only few large buffers to read from a medium exist. To allocate the buffer the function free_mem_block is used. It is allocated with get_mem_block.

The argument m_desc is the second field in the struct dsf_io_state (m_desc a pointer to a medium specific structure).

A return value of -1 indicates a failure of the connection.

"write_fct" is used to write data to the channel.

The argument "m_desc" is the second field in the struct dsf_io_state (m_desc a pointer to a medium specific structure).

"mp" is a list of STREAMS messages linked by the b_next field.

In "ret_mp" the messages that could not be sent will be returned.

A return value of-1 means a fatal error has occurred, 0 means the write was successful.

"close_fct" will close a channel. This can be called after a write error in order to make the read to fail and stimulate the recovery. In can also be used after an exchange of close messages that signal an orderly close. There will be no reconnecting in this case, all streams across this channel will close too.

"conv_flags" determine the necessary conversions in data representation. They are not defined at this time.

"str_list" is the list of streams that are currently using this channel. This list is used to stop the streams in case the underlying connection breaks, and to restart them once the channel has been reopened.

"dsf_stats" collects statistics for an object.

### 5.3.3 DSF Channel Object Administration.

5.3.3.1 DSF Channel Object Table. The supported DSF channel object types are defined in conf.c (along with the supported STREAMS drivers and modules). A specific instance of an DSF channel object is activated using dsf_channel_open(). A deactivation of a channel is done by dsf_channel_close() (in chanadmin.c). The status and the parameters of an instance are kept in the DSF channel object table. Each entry is of the following type

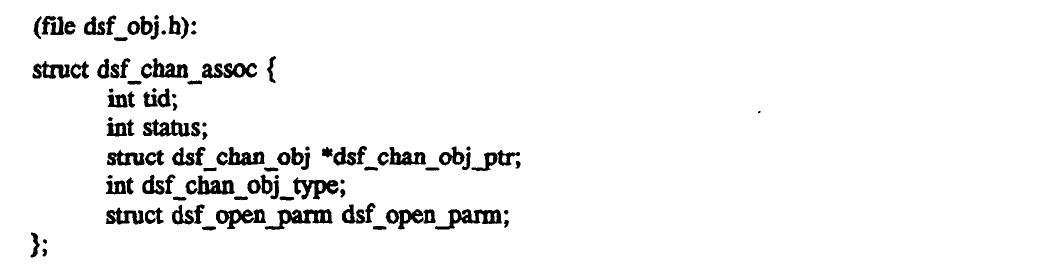

"tid" is the task id of the task responsible for this instance. If tid is 0, no task is currently associated with the instance.

"status" has one of the following values: CHAN INACTTVE (the channel is closed and no open (active or passive) is currently posted), CHAN_OPENING (the channel is being opened), CHAN_ACTIVE (a connection is established), CHAN_DATAREP_MISMATCH (an open failed because of incompatible data representation), and CHAN_VERSION_MISMATCH (an open failed because of DSF version mismatch).

dsf_chan_obj_ptr points to the specific instance of the DSF channel object. dsf_chan_obj_type is an index into an array of supported media. dsf_open_parm contains the parameters that are passed to the open routine. They are saved here, to be used again for reopening.

The structure that contains the open parameters has the following type:

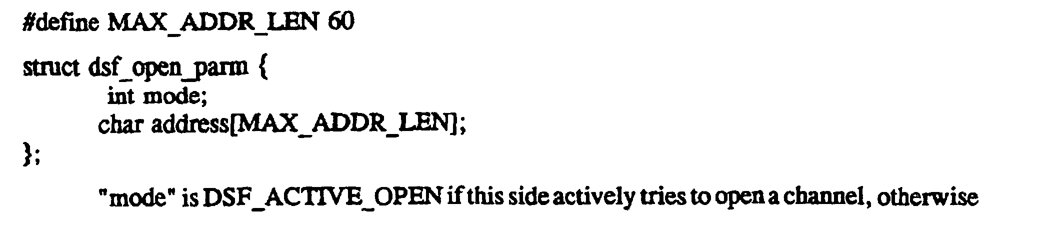

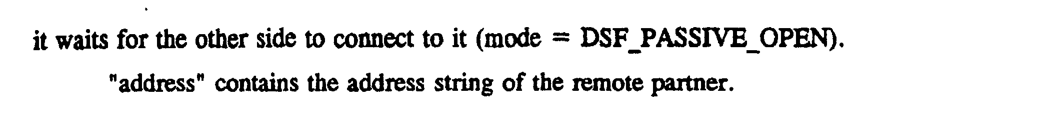

5.3.3.2 DSF Channel Open Procedure. The open function (chanadmin.c) is as follows:
int dsf_channel_open(media, mode, address)
   char *media;
   int mode;
   char *address;
   "media" is the name of the media to be used ("ipif", "shmem", "tcp", etc.).
   "mode" is set to DSF_ACTIVE_OPEN if this side actively tries to open a channel, otherwise it waits for the other side to connect to it (mode = DSF_PASSIVE_OPEN).
   "address" is the string that describes the address to be used (the length is media dependent).

"dsf_channel_open" forks off a separate task passing to it the parameters in a structure (struct dsf_open_parm). This task is responsible to set up the connection with the remote, read and process all the messages it receives, and in case the connection breaks, it will try to reopen it (unless it was a passive open with no address specified).

If this task receives a close request or a close response message, it will close all the remaining open streams, release all the resources, and then die (after responding to a close request with a close response).

"dsf_channel_open" returns -1, when the media is not supported, the fork failed, or not enough resources are available, otherwise it returns 0. dsf_cnannel_open does not wait until a connection is established.

The side that does the active open sends an open request message of the following type (note this message is not encapsulated by a dsf message):

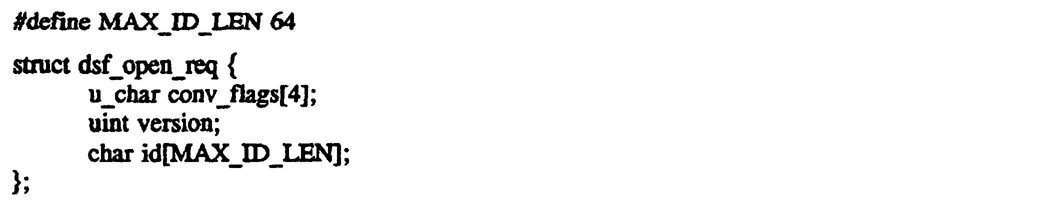

"conv_flags" define the data representation on the remote host. This message is sent in that data representation and might have to be converted. If the conversion of this data representation is not supported, the connection is rejected.

"version" is the version of DSF. If the version is not supported, the connection is rejected.

"id" contains the id of this connection. It has to be unique. In case a connection breaks the id is used to reconnect the remote stream components. It has to be a printable string consisting of the name of the name of the media used (like "OEMI_channel", "tcp", etc) followed by a space and a media specific address like the (sub)channel number or the internet address of the originator.

The response message to the open request is the open response:

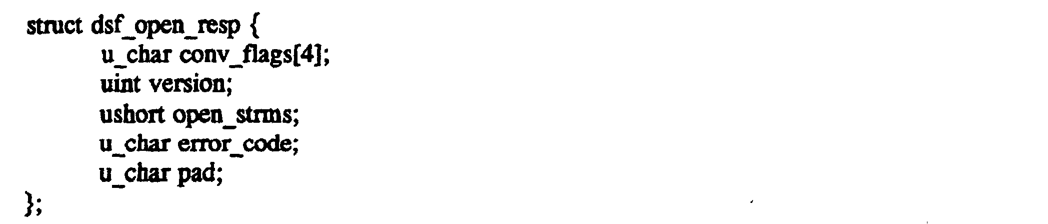

"conv_flags" contain the data representation.

"version" is the version of DSF.

"open_sums" is the number of streams that are already open on this side. This number is used to announce the number of reconnect messages that will follow. Each reconnect message contains a list of stream id pairs to be reconnected.

"error_code" is 0, if the connection is accepted, otherwise it indicates the kind of error (version mismatch or data representation problem).

"pad" fills the data structure to 8 bytes.

The response to this open response is another open response message so that both sides agree about the state the connection is in. In case of error, the task reports the status, closes the connection, and deletes itself.

5.3.3.3 Reconnection Message Exchange. After the open exchange is complete, an exchange of reconnect messages follows (if there are already open streams). This is implemented in chanhead.c. Each side sends the ids of its open streams and the stored partner ids as well as the sequence number of the last messages received for each priority and the available window to the remote. Each reconnect request can only contain a limited number of ids, thus multiple reconnect requests might be necessary. Each reconnect request is responded to with a reconnect response that contains the list of streams that have no partner. This list can be empty. Only after this exchange is complete can other messages be sent. Every request has to get an response. Streams with no partner will be closed.

Both the reconnect request and reconnect response messages are admin messages, i.e. they begin with an dsf message header (as described below). They should be sent with highest priority to avoid being passed by data messages.

The body of the reconnect messages is as follows (see dsf.h):

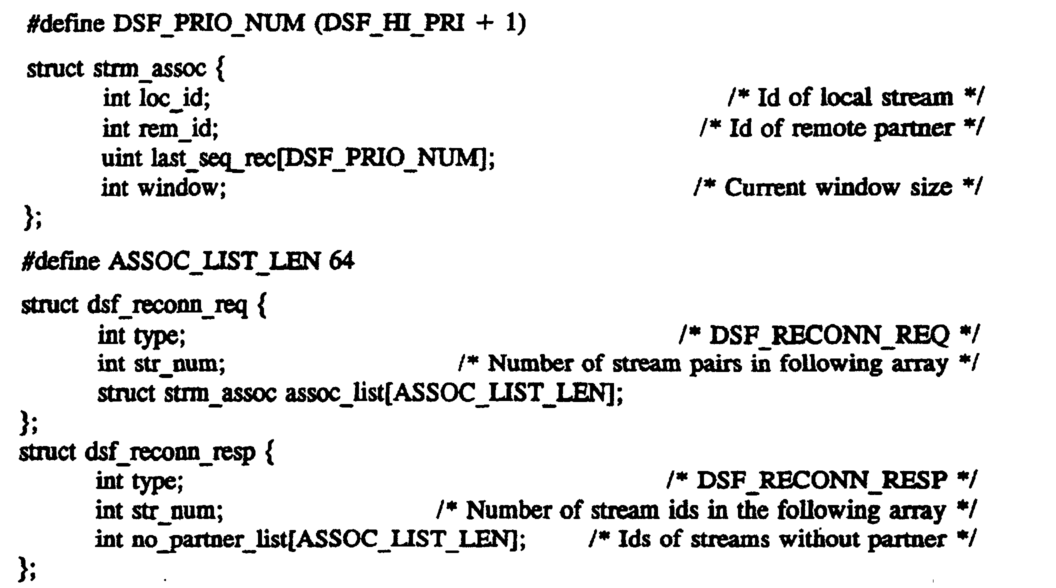

The task now reads all the messages from the remote and in case the connection breaks it is responsible for reconnection. If the task did an active open or a passive open with a specified address it goes into the open loop again after a short delay, otherwise it exits but leaves the instance entry in the DSF channel object table. This entry might still contain references to open streams that could be reconnected.

A timeout is started that will close those streams to preserve resources, if a reconnection cannot be achieved soon. If the connection is reestablished, the same protocol as after the initial open is followed.

### 5.3.3.4 Orderly Close of DSF Channel.

dsf_channel_close() causes a channel to close (chanadmin.c).

int dsf_channel_close(media, address)

int media;

char *address;

The arguments "media" and "address" are the same as those that were given to the dsf_channel_open() function. dsf channel close uses these to locate the right DSF channel object and then sends a close request message to the other side. At the same time, all streams on this channel are blocked. dsf_channel_close returns 0, if it can locate the DSF channel object and -1 otherwise.

A close request is a DSF admin message with the type field set to DSF_CHAN_CLOSE_REQ. A close response is the same except that the type field is set to DSF_CHAN_CLOSE_RESP.

After the close response message is received, the task monitoring this channel will flush all streams still active on this channel and then close those that are on the device side and send an M_HANGUP message to those on the user process side. Then the task marks the channel inactive and deletes itself.

5.3.4 Message Format. After the open message and the reconnect message exchange, all messages have the following format (see dsf.h): 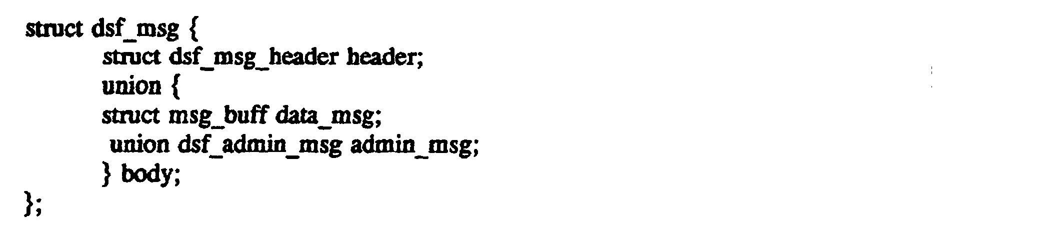 Each message consists of a header and a body.

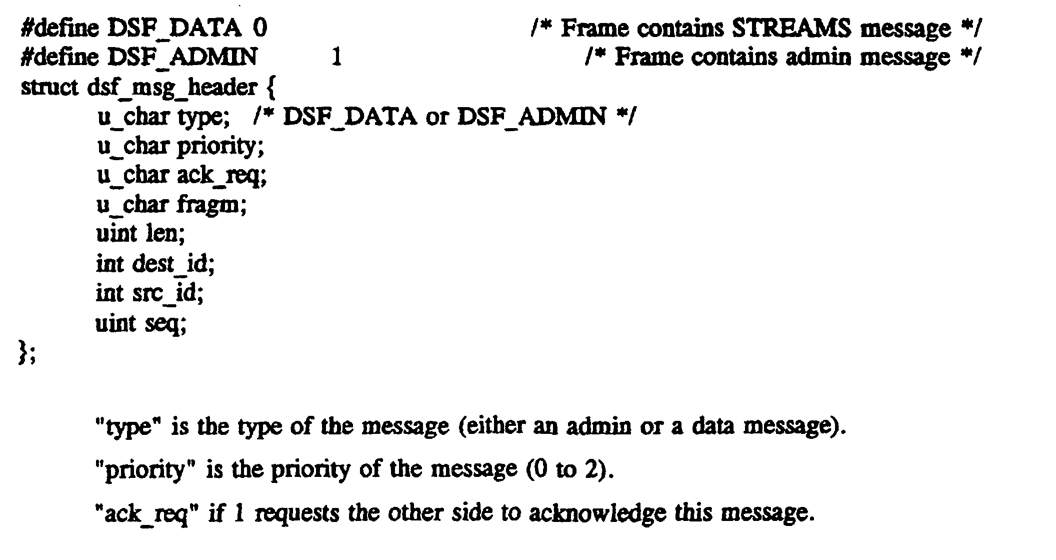

"fragm" is the id of a fragment, 0 if the message is not fragmented.

Only data messages can be fragmented (if they are longer than the maximum message length for a medium).

"len", the number of bytes in the message (including the header).

"dest_id" tells the communications module to which queue this message belongs.

Destination id 0 is reserved for admin messages that should be processed by an agent.

"src_id" is the id of the queue that sent the message.

"seq" is the sequence number of the message.

For each priority there is a different sequence number space.

In case dest_id does not contain a valid id, or the queue it refers to does not think of as src_id as its partner queue, an admin message of type R_NO_PARTNER will be sent back:

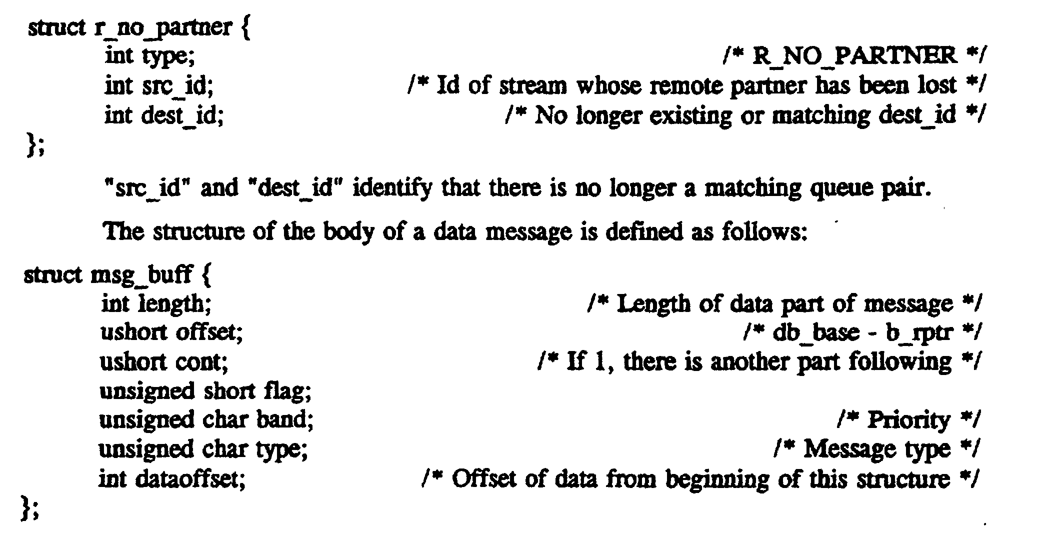

Each struct msg_buff represents one message block of a STREAMS message. A complete message consists of possibly multiple message buffers.

"length" contains the number of data bytes.

"offset" is the offset of the data from the beginning of the data buffer. This should be preserved across the channel, as other drivers or modules might want to prepend some data.

"cont" is set to 1, when another message block follows this one.

"flag" is the b_flag field of the message structure.

"band" is message priority (the b_band) field of the message structure.

"type" is the db_type field defining the type of a message.

"dataoffset" is the location of the data in the message buffer starting from the beginning of the struct msg_buff. Note: each message buffer starts on a four byte boundary. If necessary, there is padding after one block.

The translation of DSF messages into streams messages and the other way round are implemented in rstrsubr.c.

5.3.5 Miscellaneous Admin Messages. The following messages are processed by the communication module (see dsf.h):

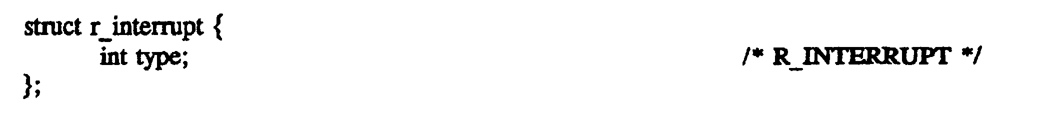

The interrupt message is only related to the stream identified by the src and dest field of the message header. It is sent with the normal priority of that stream (so it can not pass the message it is supposed to interrupt). It will cause a sleep() of this stream to terminate prematurely. If this stream is not sleeping yet, the interrupt will be delivered once it does. There is no response to the interrupt message except for the normal ack message. This processing is implemented in chanhead.c.

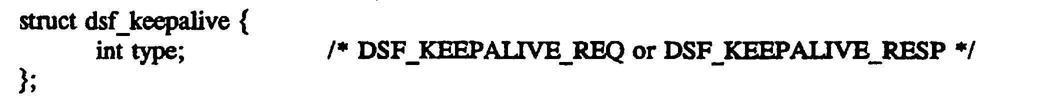

If for some time no message was received on a medium, a DSF_KEEPALIVE_REQ message is sent to the remote. The response is a DSF_KEEPALIVE_RESP. If no response is received after a period of time, it is assumed that the medium is down. This mechanism is implemented in rstrsubr.c.

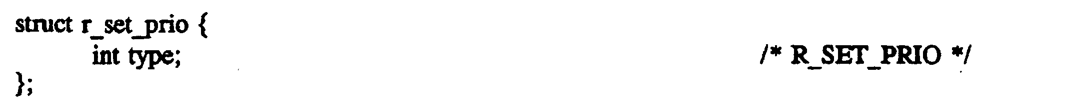

This message will set the stream (identified by the src and dest field of the header) to a higher priority stream. Normal data messages will now be assigned DSF_BAND_PRI priority to travel faster through the medium. There is no message to undo this effect. This message is the result of a call to the support function dsf_set_prio() called by a STREAMS driver or module for streams that require fast response times (implemented in supmisc.c).

### 5.3.6 Flow Control.

5.3.6.1 Principle. This feature is implemented in chanhead.c and rstrsubr.c. In the single host STREAMS environment, each module or driver inspects the next queue on the stream with canput (or bcanput) in order to find out whether another message can be put on that queue. This functionality is simulated across the DSF channel using a windowing scheme. This windowing scheme guarantees data integrity at the same time, as messages that did not get ACKed are retransmitted.

The size of a window is defined in bytes. It is related to the high water mark of the driver. Sequence numbers are assigned to each message. Messages of diffemnt priority classes use a different sequence number space. There are three priority classes:
0 - normal messages
1 - priority band messages
2 - high priority messages

The base priority for a stream (normally 0) by can be set to priority one, letting normal messages be transmitted with higher priority. This is intended to improve response time for streams carrying interactive traffic. To keep things simple the available window is the same for all. It is assumed that one priority class will be dominant for a given stream, so the window does not have to be shared between all of them. High priority messages are sent even when the window is closed.

Not all admin messages have sequence numbers. An admin message needs to be associated with two stream components in order for the ack mechanism to work properly, and some admin messages are just informational messages that do not have to be acked. For example the R_ACK, R_NAK, R_NO_PARTNER, DSF_CLOSE_REQ, DSF_CLOSE_RESP, DSF_RECONN_REQ, DSF_RECONN_RESP and DSF_KEEPALIVE have no sequence numbers. The R_OPEN_REQ has always sequence number 0, but has only one stream associated with it (the other one is requested to be opened). Therefore the open request message is not acknowledged with an ACK message but with the R_OPEN_RESP message. It is possible to receive a duplicate R_OPEN_REQ. The second one has to be recognized as a duplicate and ignored. If the R_OPEN_RESP contains an error code, it is not associated with a stream, therefore it will not be acked. If it is lost the open request will be repeated, and because it failed the first time it will not be recognized as a duplicate and therefore processed again. R_OPEN_RESP that report successful opens will be acknowledged (they also carry sequence number 0).

The R_CLOSE_REQ can be acked, but the R_CLOSE_RESP is not acked, because one of the two stream components went away. The R_CLOSE_RESP also acks the R_CLOSE_REQ (plus all previous messages).

Admin messages with sequence numbers are added into the stream of normal data messages, but they do not consume window space. Admin messages are transmitted at base priority, so for example a close message cannot pass data sent at base priority on the same queue.

An ACK message is an admin message that informs the communications module of received messages. ACK messages do not have sequence numbers and are neither ACKed or retransmitted. They have the following structure (see dsf.h):

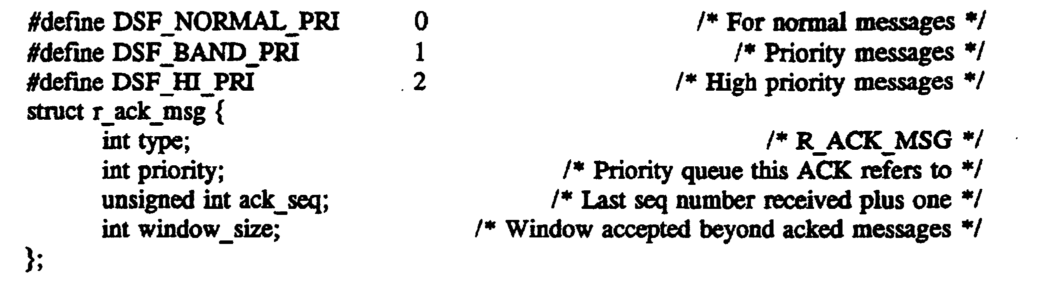

Each ACK message only refers to one priority queue (out of the three possible ones). priority defines which one.

Back_seq is the sequence number of the last acked packet plus one. It acknowledges all previous packets as well.

"window_size" is the number of bytes that can be accepted beyond the last acked data. It is allowed to shrink the window, i.e. to advertize a smaller window in a later message than was previous communicated. This way data flow can be stopped when memory resources run low. On the other hand data sent into a closed window will still be accepted when resources are available.

In order to decrease the number of ACK messages sent, ACKs may be delayed. Admin messages however are ACKed immediately.

In case there are no resources to copy a message out of the communications buffer into a streams message, a NAK message is sent. It has to be ensured that this NAK message is sent eventually, even when no resources are available at the moment. NAK messages do not have sequence numbers either.

Another event that can trigger a NAK message is the reception of a packet with a sequence number that is larger than expected. A NAK message conveying the next expected sequence number will be sent (if no such NAK message was sent before).

A NAK message has the following format (see dsf.h):

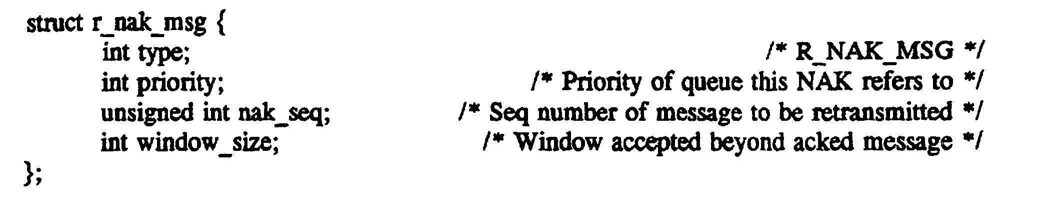

5.3.6.2 Flow Control Protocol. The flow control protocol has the goal to reliably deliver messages from one stream component to the other, provide high throughput and little overhead.

The reliability is based on sequence numbers and acknowledgements, the high throughput is achieved through the windowing scheme, and the protocol is parsimonious with ACK and NAK messages as well as window updates and does not require timers to ensure low overhead.

Before the rules of the protocol are listed, these are some definitions:
"communicated window" is the window size communicated to the remote side available window is the window size that would be communicated, if an ACK/NAK message would be sent at this time - it reflects the real available space and is always greater or equal to the communicated window.
"maximum window" is two times the higher water mark of the top driver of a stream. It is always greater or equal to the available window.

The following are the general rules of the protocol (assume n was the last sequence number received in rules that use sequence numbers):

The original window size (in bytes) is contained in the r_open_req and r_open_resp message (it can be smaller than maximum window).

Admin messages have sequence numbers as part of the base priority data stream, but use up no window.

Admin messages and higher priority messages should be sent with the ack_req flag set.

Messages with ack_req set flag have to be acked.

Higher priority data messages do not use up window.

High priority messages can be sent into a closed window.

The first sequence number is 0 (there is no random selection of the initial sequence number).

It is allowed (and sometimes necessary to avoid hung connections) to send a data message that is larger than the window, as long as the window is open. The receiver of a message that is larger than the communicated window will respond with an ACK or NAK (depending on the resource situation) to communicate the currently available window size (which could be 0).

If an ACK or NAK message is to be sent, but there are no resources available at this time to do it, it has to be ensured that they will be sent later. The only valid reason for an ACK or NAK not to be transmitted is a fatal media error!

After receiving a data message of base priority with sequence number n+ 1 of k bytes and being able to transfer it to a STREAMS message the available window and communicated window size are reduced by k bytes. If the communicated window shrinks below x% of the available window size or if more than m received messages have not been ACKed, an ACK message is generated with the new window size (for example, x could be 50 and m 10).

If not enough resources are available to copy the data message of base priority with sequence number n+1, the message is dropped and a NAK (n+1) message is generated telling the remote that this message needs to be retransmitted. This NAK message could be delayed until the required resources are available. Another policy is to send a NAK with available window size 0 right away and send an ACK with the correct window size after a short delay.

When a data message with sequence number n + k (k > 1) is received, the remote side is informed with an NAK (n+1) message that the sequence number n + 1 was missing. This NAK message is not sent, if NAK (n+1) was sent before. The received message will be dropped. The reason is that because the communication is put on top of a reliable data stream, missed packets indicate that resources were lacking to service a previous packet. In this situation it is not advisable to use up more resources by storing packets that cannot be processed immediately.

When a data message with sequence number n - k (k > 1) is received, an ACK message is sent to tell the remote side of the state of the connection. This can be used by the remote side to trigger an ACK to free up resources.

Whenever the communicated window shrinks below x% of the available window size (due to processing), an ACK message is sent communicating the currently available window size.

Whenever the available window size becomes smaller than the communicated one, (due to lack of resources), an ACK message is sent communicating the new (reduced) window size.

After receiving a NAK m message, retransmit all packets with sequence number greater or equal to m.

After a channel reconnect, retransmit all non-ACKed messages and send an ACK message containing information about the last received sequence number an the currently available window.

This protocol assumes that it runs on top of a reliable data stream like TCP or the OEMI channel. Taking this into account it can avoid a high overhead but can still provide reliability. Packets can only get lost due to fatal error of the connection, and packets can get lost, when not enough memory exists to copy them from the receive buffer into a STREAMS buffer. NAK and ACK packets do not get lost due to resource problems on the receiver side, because they are not copied out of the buffer. If the sender does not have the resources to send an ACK that contains a larger window size it gets sent later in order not to block the stream.

Timeouts are not needed (and much overhead is saved) by this operation. Assume a packet is lost due to fatal channel error: After the channel is reconnected, all non-acked messages are retransmitted, and the current window size is communicated. This makes sure all the data gets delivered and no stream stays blocked.

Assume a packet gets lost because of lack of memory, the NAK informs the other side of this, and the message can get retransmitted. The NAK message might also contain a reduced window size to put back pressure on the other side.

The ack_req flag has the purpose to enable the transmitter to free up resources. Usually one would like to send as few ACKs as possible to reduce overhead. From the receiver's point of view ACKs are only necessary to update the window and keep the data flowing, but the transmitter has to keep the data in buffers until it is ACKed using up resources. Asking the receiver explicitly for an ACK can solve that problem. ACK requests can be part of ACK messages, thus allowing a transmitter to send them at any time (even in duplicate ACK messages).

The criterium to send an ack_req should be resource dependent. If a lot of resources are available, the transmitter can wait longer for ACKs. When resources are tight, ACKs are eagerly awaited for each sent message. This threshold to set the ack_req flag is implemented similarly to the "dynamic window adjustment".

5.3.6.3 Dynamic Window Adjustment. Initially the window size is set to two times the high water mark of the top driver. As more and more streams are opened, memory resources might be getting scarce. One policy is to adjust the window size according to the number of open streams. However some streams might only have light traffic and not be using as many resources. The window size therefore is changed according to use. If resources run out, the window sizes of all streams will be reduced (cut in half). If after some time (one second or so) resources are still not enough, further reductions can be imposed up to a limit of one eighth of the original window size.

If more resources become available, the window size is increased again. This operation is implemented in chanhead.c.

5.3.7 Fragmentation. In order to be independent of the maximum message size a medium large messages can be fragmented. Fragmentation is only supported for data messages. It is assumed that the maximum message size of a medium is always larger than the largest possible admin message.

If fragmentation needs to occur, the message is broken up into maximum length fragments (except for the last fragment). The message contents is not changed, only the message headers for each fragment are slightly different. The len field contains the length of the fragment rather than the total length of the message. Secondly the fragm field is (naturally) different for all fragments. The first fragment has the BEGIN_FRAGMENT bit set plus the number of fragments this message consists of. The following fragments' fragm field is one less that the previous fragment's. The last fragment has fragm set to 1. All other fields of the message headers are identical.

If for some reason one of the fragments of a message does not get received by the remote system, all fragments have to be retransmitted. This operation is implemented in chanhead.c.

5.3.8 Message Send-Ahead. If memory resources become tight for the lower part of a stream, parts of messages can already be sent to the upper remote partner before a message is completely constructed. This is done by oring the b_flag field of a message with 0x8000 and calling putnext. The DSF implementation on the remote host will not send this message upstream until a message without this bit in the b_flag field set arrives. All such messages are concatenated using the b_cont field. This feature is supported for M_DATA messages only. However a single M_PROTO message can be part of the sequence. If an M_PROTO message is sent, its control part will be put in front of the accumulated message parts and its data part will be appended at the end.

Message Send-Ahead has to be implemented by the driver of the lower part of the steam. The driver next up on the remote host does not have to change as the DSF on the remote host waits with sending the message to it until it is complete.

### 5.4. SUPPORT FUNCTIONS.

5.4.1 Header Files. All header files used by DSF are contained in the sys sub-directory of the include directory. Most of these files are derived from SVR4 header files with no modification except for the directory where they reside and the dependency on KERNEL is removed (it is assumed to be defined). These files can be used by STREAMS drivers and modules that run on the I/O processor 9. The DSF specific files are not needed by STREAMS drivers or modules.
- adm55.h: DSF specific file was admin driver.
- agent.h: DSF specific file.
- callo.h: No modifications.
- clock.h: Modified file. Contains lbolt declaration and function prototypes for timeout and delay functions.
- cmn_errh: Removed definitions that are not used from SVR4 file.
- conf.h: Removed line discipline and terminal related stuff, modified the type struct cdevsw and struct fmodsw (see chapter on configuration).
- cred.h: Removed crhold macro and the function prototypes that are not supported.
- debug.h: No modifications.
- ddi.h: Modified file. Contains only supported things.
- devlist.h: Special file used for configuring devices on the I/O processor 9.
- dsf.h: Contains DSF type definitions that are shared between the host and the I/O processor 9 side.
- dsf_obj.h: Contains DSF type definitions that are I/O processor 9 specific.
- errno.h: Standard SVR4 defines of error codes.
- file.h: Contains defines and function prototypes that are used for streams that originate on the I/O processor 9.
- ioccom.h: No modifications.
- kmem.h: Additional defines, types and prototypes.
- log.h: No modifications.
- lstream.h: Definitions for streams originating on the I/O processor 9.
- mkdev.h: Contents unmodified.
- param.h: Some unnecessary stuff removed.
- privilege.h: No modifications.
- proc.h: DSF specific file. Not to be used by drivers or modules.
- sad.h: No modifications.
- secsys.h: Removed not needed definitions.
- signal.h: Kept only the definitions of the signals (for use by STREAMS drivers).
- stream.h: Removed struct str_evmsg and included the host's link id in the last element of 1_pad□.No other modifications.
- strlog.h: No modifications except that NLOGARGS is increased to 4 from 3.
- strmdep.h: No modifications.
- stropts.h: Removed event and file descriptor passing related definitions. No modifications otherwise.
- strstat.h: No modifications.
- strsubr.h: Modifications to struct stdata to remove non-supported features like event and signal processing. Added a DSF specific field to the struct. No other modifications in the file.
- syslog.h: No modifications.
- sysmacros.h: Macros retain the same meanings. No modifications a driver or module writer needs to worry about.
- termio.h: No modifications.
- termios.h: Removed definitions not used by STREAMS implementation.
- ttold.h: Removed definitions not used by STREAMS implementation.
- types.h: No modifications.
- var.h: Removed all definitions not needed by DSF.
- vnode.h: DSF specific header file. Not to be used by drivers or modules.

5.4.2 Library Functions. Besides the functions that make up the intrinsic STREAMS environment, STREAMS drivers can call other functions that are supplied by the UNIX kernel and therefore have to be supplied by the DSF environment as well to make STREAMS drivers and modules portable.

There are two groups of functions: library functions like strcpy(), bcopy(), or sprintf(), and secondly UNIX functions like sleep(), wakeup() and timeout(). The first group is supplied as a library together with the C-compiler and is not covered in this document. The other functions had to be implemented especially for DSF and are described here. A third group of functions are user-style functions needed for streams originating on the I/O processor 9. They are covered in the section on local streams.

All functions have the same interface as under SVR4. The interface is not repeated here.
- Time related functions: timeout(), untimeout(), and delay() (clock.c).
- Diagnostic functions: strlog() - log.c - (needs a configured log driver and a special strace command that will talk to this log driver rather than the local one on the host), cmn_err() and assfail() - cmn_err.c. In case of panic a message will be printed on the console of the Shelf Controller, otherwise cmn_err() messages are appended to the trace file.
- DDI functions: drv_getparm(), set_uerror(), get_uerror() and etoimajor() - ddi.c.
- Memory management: kmem_alloc(), kmem_zalloc(), kmem_fast_alloc(), kmem_-fast_zalloc(), kmem_free, kmem_fast_free() and kmem_avail() - kma.c.
- Privilege functions: pm_denied() - lpm.c - and suser() - suser.c.
- sleep functions: sleep, wakeprocs() and wakeup() - slp.c.
- Auxiliary functions: atox() - Translate a hex string to a number - supmisc.c.
- DSF functions: dsf_set_prio() - set stream to priority DSF_BAND_PRIO. The argument of dsf_set_prio() has to be the read queue of the stream - supmisc.c.

All these functions are derived from SVR4 source. sleep() might have the most modifications. kmem_alloc() has a modification to allow merging of smaller blocks to larger ones more easily than the original implementation. This helps in tight resource situations.

### 5.5. STANDARD DRIVERS.

Some STREAMS drivers come as part of the environment. If they are to be used, they need to be configured explicitly (see section on configuration).

### Clone driver

The clone driver (necessary to define clone devices) functions in the same way as under SVR4 (implemented in clone.c).

### Log driver

The log driver supports the strlog() function. A special strace command needs to be used that will talk to this remote log driver but otherwise works just the same as the standard strace implemented in log.c.

### STREAMS Admin Driver

Standard driver to do autopush and module name verification - sad.c.

### admin\ driver

The admin driver responds to admin requests - adm55.c. It also functions as a loopback driver that echoes the data sent to it on one stream to another.

5.6. LOCAL STREAMS. The DSF allows streams to start on the I/O processor 9 by simulating a user environment. Currently those streams also have to end on the I/O processor 9, no support for distributed streams originating on the I/O processor 9 is given.

Local streams have to be processed by separate tasks (similar to UNIX user processes). These tasks have to be created using the fork_utask() function (implemented in fork.c). Otherwise the sleep() - wakeup() mechanism will not work. proc_t *fork_utask(void (*func)(), int tid, int pri, caddr_t arg)
"func" is the main function of the user task (it has no argument).
"tid" is the requested task id. If tid is 0, a task id is automatically chosen.
"pri" is the priority of the task (0 being the highest and 255 the lowest).
"arg" is an argument that can be passed to the task. The task can retrieve this argument using the get_proc_arg() function described below.

If fork_utask() was successful, it returns the proc structure of the child task otherwise NULL. When a task is killed (by sc_tdelete()) this proc structure is automatically freed.

The created user task gets a default SVR4 credential associated with it that does not restrict any privileges. On the I/O processor 9 there is no protection anyway. The issue of protection will have to be addressed on the host side, if distributed streams originating on the I/O processor 9 will be supported.
int get_proc_arg(caddr_t *arg_ptr)

This function retrieves the argument that was passed to the current task - fork.c where "arg_ptr" is the address of a variable to take the argument.

If the task was not created by fork_utask() get_proc_arg returns 0, and *arg_ptr is undefined, otherwise the function returns 1.

The following functions simulate the I/O interface of a UNIX user task. It consists of the standard open() (open.c), close() (close.c), read() (read.c), write() (write.c) and ioctl() (ioctl.c) functions as well as the STREAMS functions putmsg() (write.c), putpmsg (write.c), getmsg() (read.c) and getpmsg() (read.c). There is no poll() function.

All these functions have the same interface as the standard UNIX version including the error code return in the variable errno. The open() function has slight modification, int open(char *path, int oflag) where "path" is the name of the device to be opened. This name will be translated into he minor and major device number. In UNIX "path" refers to a file name, here we only have a rudimentary file system. "oflag" contains the flags as in the UNIX open system call.

In case of success, the return value is the file descriptor to be used for the other I/O system calls. In case of failure, the return value is -1 and errno contains the error code.

### 5.7. CONFIGURATION.

5.7.1 Introduction. There are three kinds of configurations required. The supported communication channels have to be defined, the STREAMS drivers and modules have to be configured to assign major numbers to the drivers and register their interrupt handlers and make the module names known, and thirdly a rudimentary file system defines the accepted minor numbers for each driver including the clone driver.

The first two parts are static and have to be done before creating the hex file to be downloaded. The last part can be dynamic, i.e. more nodes can be defined during runtime to supplement those that are compiled in.

5.7.2 Configuration of Communication Channels. The configuration is done in the application specific file conf.c that resides in a sub-directory of ROOT/str/support. The array dsfchosw contains all entries of supported DSF channel objects. An entry has the type:

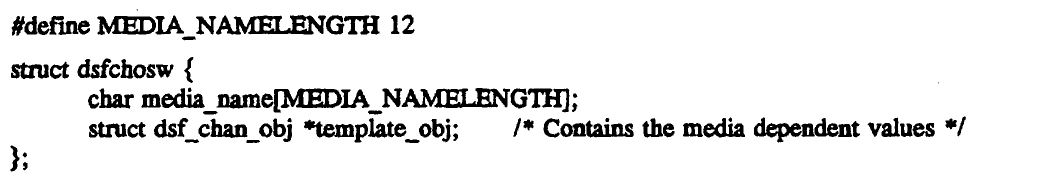

"media_name" is a string that is used as a parameter to dsf_channel_open().

"template_obj" is a DSF channel object template that contains the I/O functions of the object plus default values for the other parameters. Each instance of an DSF channel object of this kind is a modified copy of the template.

5.7.3 Configuration of STREAMS Drivers and Modules. The drivers and modules are also configured in the file conf.c. Drivers are listed in the array cdevsw. The position in this array corresponds to the major device number. The type is: 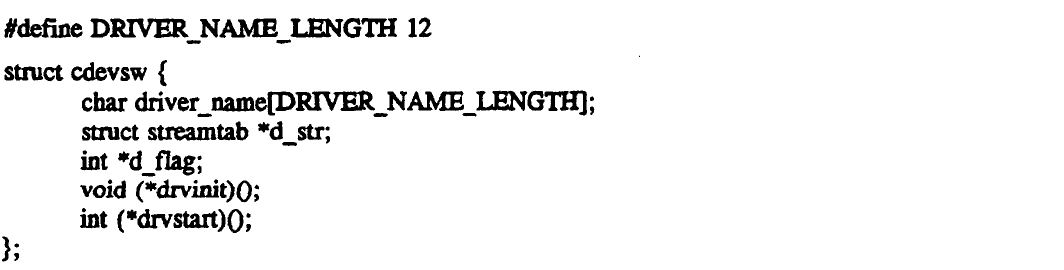 "driver_name" is the name of the driver. This string is used by an r_open request to identify the driver.
"d_str" points to the standard structure to define the driver.
"d_flag" is the address of the flag indicating whether the driver obeys the SVR4 conventions (last bit of *d_flag is 0) or the old System V Release 3 conventions (last bit of *d_flag is 1).

"drvinit" the driver init routine that will be called at boot time (if it exists).

"drvstart" the driver start routine that will be called at boot time (if it exists) after the init routines of all drivers and modules have been called.

If an interrupt handler is associated with a driver it would normally have to be registered with the its interrupt vector. This can be done as part of the open or initialization routine of the driver.

Modules are declared in the array fmodsw whose entries have the type:

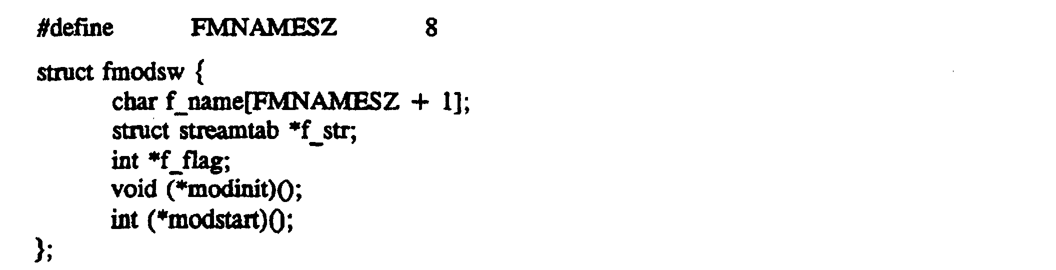

"f_name" is the name that identifies the module and has to be passed to the I_LINK ioctl call or the R_LINK request.

"f_str" points the standard structure to define the module.

"f_flag" is the same as d_flag in the driver configuration structure.

"modinit" is the initialization routine for the module to be called at boot-time (if it exists).

"modstart" is the start routine of the module to be called at boot-time (if it exists) after the initialization routines of all drivers and modules have been called.

5.7.4 Device Configuration. The rudimentary file system consists of two types of nodes, fnodes and vnodes. Fnodes associate names with devices (a device being a major plus a minor number). They are only used by local streams mapping the path argument of the open() to a device number. Vnodes represent a major and minor number and contain other information associated with an open steam. This is implemented in vnode.c and fdesc.c. A vnode structure is defined as follows (see vnode.h):

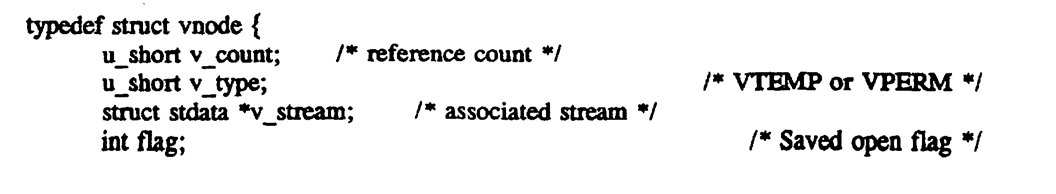

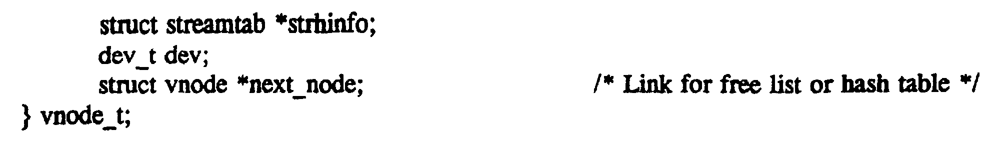

"v_count" is the number of times this stream was opened. If v_count changes from 1 to 0 the stream close routine is called.

"v_type" indicates whether the vnode is temporary or permanent. Permanent vnodes are the configured vnodes, temporary ones get created whenever a clonable driver gets opened. Temporary vnodes are deleted when the associated stream is closed.

"v_stream" points to the structure of the stream head of the associated stream. flag is the saved flag of the open call.

"strhinfo" is the structure that contains the put and service routines of the associated stream head (this can be a local or a remote one).

"dev" is the complete device number of the device associated with this vnode.

"next_node" is a pointer to another vnode in a list of vnodes.

For each minor number of a non-clone device there has to exist a vnode, and for each clonable driver there has to be a vnode with the major number being the major number of the clone driver and the minor number being the major number of the clonable driver. This configuration is done by calling the function configure().

As fnodes are only used for local streams; they need not exist, if no local streams are to be opened for a device.
int configure(struct devicelist *devicelist, int length);
"devicelist" is an array of entries of type devicelist defined below.
"length" is the number of entries in devicelist.
configure() returns the number of entries processed. If that number is smaller than length, as error occurred during processing of that entry.

The struct devicelist is defined as: 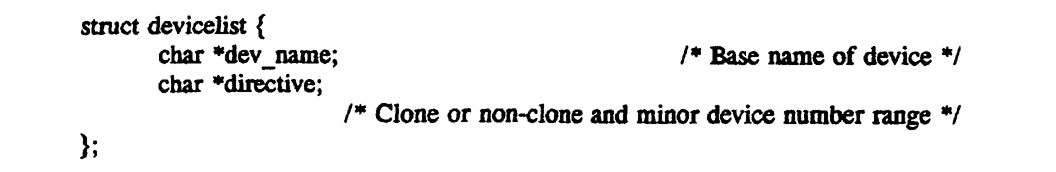 "dev name" is the name of the device driver as in struct cdevsw.
"directive" contains a string that describes the vnodes and fnodes to be created. The string has the format "n [-m] [f]", where n is an integer greater or equal to -1, m is an integer greater or equal to 0, and f is the letter 'f'. If n is -1, the device is a clonable device and m is not present. If 'f' is present an fnode gets created besides the vnode. If n is a number greater or equal to 0, n and m define the range of minor numbers for a device. If m is not present only one device with minor number n gets created. If 'f' is present fnodes are created with the name consisting of the name of the driver with the minor number as a suffix. For example "top", "-1 f" would create a vnode with the major number of the clone device and as minor number the major number of the device "tcp" (assumed it exists), and an fnode with the name "tcp" and the same device number; "enet" "0 3 f" would create vnodes and fnodes with the major number of the enet driver and the minor numbers 0 to 3. The names of the fnodes would be "enet()" to "enet3".

### FILE LISTINGS

File listing of code for the present invention appear in the attached APPENDIX where the new files added to a UNIX system running on the AP processor 8 are identified below under AP PROCESSOR, where the new files added to a UNIX system running on the I/O processor 9 are identified below under I/O PROCESSOR NEW, where the modified files from a UNIX system running on the I/O processor 9 are identified below under I/O PROCESSOR MODIFIED, where the new INCLUDE files for a system are identified below under INCLUDE NEW, and where the modified INCLUDE files for a system are identified below under INCLUDE MODIFIED.

### AP PROCESSOR NEW

chan_adm.c
dsf_daemon.c
dsf_format.c
dsf_trace.c
dsfdrv.c
med_support.c
mirror.c
mirror.h
reload_route
restart_media
rstrace.c
vme_adm.c
vmedrv.c

### I/O PROCESSOR MODIFIED

clock.c.diff
lstreamio.c.diff
sip.c.diff
streamio.c.diff
strsubr.c.diff

### I/O PROCESSOR NEW

adm55.c
agent.c
chanadmin.c
chanhead.c
close.c
confmgr.c
driver.c
dsfmisc.c
fdesc.c
fork.c
octl.c
mem.c
module.c
open.c
read.c
rstrsubr.c
supmisc.c
vnode.c
write.c

### INCLUDE NEW

adm55.h
agent.h
clock.h
devlist.h
dsf.h
dsf_obj.h
lstream.h
proc.h
vnode.h
vrtx.h

### INCLUDE MODIFIED

cmn_err.h.diff
conf.h.diff
cred.h.diff
ddi.h.diff
dif
file.h.diff
kmem.h.diff
log.h.diff
param.h.diff
secsys.h
signal.h.diff
stream.h.diff
strlog.h.diff
stropts.h.diff
strsubr.h.diff
sysmacros.h.diff
ttold.h.diff
var.h.diff

## Claims

1. A distributed communication apparatus (14) for a distributed computer system, the computer system comprising:
an application processor (8), including an application processor operating system (20) and an application program (22)
an I/O processor (9), including an I/O processor operating system (21); and
a protocol stack (12) formed of a plurality of stack layers (15,16) where communication between layers is by messages conforming to a common framework, said stack having a stack top (15) formed of a first set of said stack layers and a stack bottom (16) formed of a second set of said stack layers,
**characterised in that**:
the distributed communication apparatus (14) is arranged to enable said application processor (8) and said I/O processor (9) for distributed processing, wherein
said application processor is arranged to execute said protocol stack when not enabled for distributed processing and to execute said stack top (15) with messages conforming to said common framework when enabled for distributed processing, and
said I/O processor is arranged to execute said stack bottom (16) with messages conforming to said common framework when enabled for distributed processing,
said distributed communication apparatus (14) including a proxy layer in said stack top (15) corresponding to a layer in said stack bottom (16) for receiving messages in said stack top (15) as a proxy for layers in said stack bottom (16) and includes an application agent executing in said I/O processor (9) representing said application program (22) executing in said application processor (8), said distributed communication apparatus (14) connecting said application processor (8) and said I/O processor (9) for causing messages to said stack bottom (16) to execute in said I/O processor (9) when enabled for distributed processing and for causing messages to said stack top (15) to execute in said application processor (8) when enabled for distributed processing wherein said stack top (15) and said stack bottom (16) operate together when enabled for distributed processing to execute said stack conforming to the common framework.

2. The communication apparatus of claim 1, wherein said common framework is the STREAMS framework.

3. The communication apparatus of claims 1 or 2, wherein said distributed communication apparatus (14) includes a communication link connected between said application processor (8) and said I/O processor (9) for communication messages between said stack top (15) executing in said application processor (8) and said stack bottom (16) executing in said I/O processor (9).

4. The communication apparatus of claim 3, wherein said communication link includes a communication protocol for communicating over said communication link and transform means for transforming messages to and from said communication protocol wherein messages are communicated over said communication link between said stack top (15) executing in said application processor (8) and said stack bottom (16) executing in said I/O processor (9).

5. The communication apparatus of claim 1, wherein messages include data messages and administrative messages and said distributed communication apparatus (14) includes,
a communication link connected between said application processor (8) and said I/O processor (9),
transfer means responsive to said proxy layer for sending data messages over said communication link from said stack top (15) executing in said application processor (8) to said stack bottom (16) executing in said I/O processor (9).

6. The communication apparatus of claim 5 wherein said communication link includes a communication protocol for communicating messages over said communication link and transform means for transforming messages to and from said communication protocol.

7. The communication apparatus of claim 6, wherein said transfer means includes,
means for transferring messages input from said stack top (15) to said first proxy layer as top output messages to said stack bottom (16) for execution by said stack bottom (16),
means for transferring messages input from said stack bottom (16) as output messages to said stack top (15) for execution by said stack top (15).

## Patentansprüche

1. Verteilte Kommunikationsvorrichtung (14) für ein verteiltes Computersystem, wobei das Computersystem Folgendes umfasst:
einen Anwendungsprozessor (8) mit einem Anwendungsprozessor-Betriebssystem (20) und einem Anwendungsprogramm (22),
einen E/A-Prozessor (9) mit einem E/A-Prozessor-Betriebssystem (21); und
einen Protokollstapel (12) aus einer Mehrzahl von Stapelschichten (15, 16), wenn die Kommunikation zwischen Schichten durch Meldungen erfolgt, die einem gemeinsamen Gerüst entsprechen, wobei der genannte Stapel einen Top-of-Stack (15) aus einem ersten Satz der genannten Stapelschichten und einen Bottom-of-Stack (16) aus einem zweiten Satz der genannten Stapelschichten aufweist,
**dadurch gekennzeichnet, dass**:
die verteilte Kommunikationsvorrichtung (14) die Aufgabe hat, den genannten Anwendungsprozessor (8) und den genannten E/A-Prozessor (9) für eine verteilte Verarbeitung zu aktivieren, wobei
der genannte Anwendungsprozessor die Aufgabe hat, den genannten Protokollstapel auszuführen, wenn er nicht für eine verteilte Verarbeitung aktiviert ist, und den genannten Top-of-Stack (15) mit Meldungen auszuführen, die dem genannten gemeinsamen Gerüst entsprechen, wenn er für eine verteilte Verarbeitung aktiviert ist, und
der genannte E/A-Prozessor die Aufgabe hat, den genannten Bottom-of-Stack (16) mit Meldungen auszuführen, die dem genannten gemeinsamen Gerüst entsprechen, wenn er für eine verteilte Verarbeitung aktiviert ist,
wobei die genannte verteilte Kommunikationsvorrichtung (14) eine Proxy-Schicht in dem genannten Top-of-Stack (15) aufweist, die einer Schicht in dem genannten Bottom-of-Stack (16) zum Empfangen von Meldungen in dem genannten Top-of-Stack (15) als Proxy für Schichten in dem genannten Bottom-of-Stack (16) entspricht und einen Anwendungsagenten aufweist, der in dem genannten E/A-Prozessor (9) abläuft, der die Ausführung des genannten Anwendungsprogramms (22) in dem genannten Anwendungsprozessor (8) repräsentiert, wobei die verteilte Kommunikationsvorrichtung (14) den genannten Anwendungsprozessor (8) und den genannten E/A-Prozessor (9) verbindet; um zu bewirken, dass Meldungen zu dem genannten Bottom-of-Stack (16) in dem genannten E/A-Prozessor (9) ausgeführt werden, wenn dieser für eine verteilte Verarbeitung aktiviert ist, und um zu bewirken, dass Meldungen in dem genannten Top-of-Stack (15) in dem genannten Anwendungsprozessor (8) ausgeführt werden, wenn dieser für eine verteilte Verarbeitung aktiviert ist, wobei der genannte Top-of-Stack (15) und der genannte Bottom-of-Stack (16) bei Aktivierung für eine verteilte Verarbeitung zusammenwirken, um den genannten Stapel auszuführen, der dem gemeinsamen Gerüst entspricht.

2. Kommunikationsvorrichtung nach Anspruch 1, bei der das genannte gemeinsame Gerüst das STREAMS-Gerüst ist.

3. Kommunikationsvorrichtung nach Anspruch 1 oder 2, wobei die genannte verteilte Kommunikationsvorrichtung (14) eine Kommunikationsverbindung aufweist, die zwischen dem genannten Anwendungsprozessor (8) und dem genannten E/A-Prozessor (9) zum Kommunizieren von Meldungen zwischen dem genannten Top-of-Stack (15) zur Ausführung in dem genannten Anwendungsprozessor (8) und dem genannten Bottom-of-Stack (16) zur Ausführung in dem genannten E/A-Prozessor (9) geschaltet ist.

4. Kommunikationsvorrichtung nach Anspruch 3, wobei die genannte Kommunikationsverbindung ein Kommunikationsprotokoll für die Kommunikation über die genannte Kommunikationsverbindung und ein Transformationsmittel zum Transformieren von Meldungen in das und aus dem genannten Kommunikationsprotokoll beinhaltet, wobei Meldungen über die genannte Kommunikationsverbindung zwischen dem genannten Top-of-Stack (15) zur Ausführung im genannten Anwendungsprozessor (8) und dem genannten Bottom-of-Stack (16) zur Ausführung im genannten E/A-Prozessor (9) kommuniziert werden.

5. Kommunikationsvorrichtung nach Anspruch 1, bei der Meldungen Datenmeldungen und Administrationsmeldungen beinhalten und die genannte verteilte Kommunikationsvorrichtung (14) Folgendes beinhaltet:
eine Kommunikationsverbindung zwischen dem genannten Anwendungsprozessor (8) und dem genannten E/A-Prozessor (9),
Übertragungsmittel, die auf die genannte Proxy-Schicht ansprechen und Datenmeldungen über die genannte Kommunikationsverbindung vom genannten Top-of-Stack (15) zur Ausführung im genannten Anwendungsprozessor (8) zum genannten Bottom-of-Stack (16) zur Ausführung im genannten E/A-Prozessor senden.

6. Kommunikationsvorrichtung nach Anspruch 5, bei der die genannte Kommunikationsverbindung ein Kommunikationsprotokoll zum Kommunizieren von Meldungen über die genannte Kommunikationsverbindung und Transformationsmittel zum Transformieren von Meldungen in das und aus dem genannten Kommunikationsprotokoll beinhaltet.

7. Kommunikationsvorrichtung nach Anspruch 6, wobei das genannte Übertragungsmittel Folgendes beinhaltet:
Mittel zum Übertragen von Meldungen, die von dem genannten Top-of-Stack (15) kommen, zu der genannten ersten Proxy-Schicht als obere Ausgangsmeldungen zum genannten Bottom-of-Stack (16) zur Ausführung durch den genannten Bottom-of-Stack (16),
Mittel zum Übertragen von Meldungen, die von dem genannten Bottom-of-Stack (16) kommen, als Ausgangsmeldungen zum genannten Bottom-of-Stack (16) zur Ausführung durch den genannten Top-of-Stack (15).

## Revendications

1. Dispositif de communication réparti (14) pour un système d'informatique réparti, le système d'informatique étant constitué de :
un processeur d'application (8), comprenant un système d'exploitation (20) du processeur d'application et un programme d'application (22)
un processeur E/S (9), comprenant un système d'exploitation (21) du processeur E/S ; et
une pile de protocoles (12) formée d'une pluralité de couches de pile (15, 16) où la communication entre couches a lieu par messages conformes à une architecture commune, ladite pile ayant un haut de pile (15) formé d'un premier ensemble desdites couches de pile et un bas de pile (16) formé d'un deuxième ensemble desdites couches de pile,
**caractérisé en ce que** :
le dispositif de communication réparti (14) est agencé pour valider ledit processeur d'application (8) et ledit processeur E/S (9) pour le traitement réparti, dans lequel
ledit processeur d'application est agencé pour exécuter ladite pile de protocoles lorsqu'il n'est pas validé pour le traitement réparti et pour exécuter ledit haut de pile (15) avec des messages conformes à ladite architecture commune lorsqu'il est validé pour le traitement réparti, et
ledit processeur E/S est agencé pour exécuter ledit bas de pile (16) avec des messages conformes à ladite architecture commune lorsqu'il est validé pour le traitement réparti,
ledit dispositif de communication réparti (14) comprenant une couche de substitution dans ledit haut de pile (15) correspondant à une couche dans ledit bas de pile (16) pour recevoir des messages dans ledit haut de pile (15) comme substitution des couches dans ledit bas de pile (16) et comprend un agent d'application exécutant dans ledit processeur E/S (9) représentant ledit programme d'application (22) exécutant dans ledit processeur d'application (8), ledit dispositif de communication réparti (14) connectant ledit processeur d'application (8) et ledit processeur E/S (9) pour faire exécuter dans ledit processeur E/S (9) les messages envoyés audit bas de pile (16) lorsqu'il est validé pour le traitement réparti et pour faire exécuter dans ledit processeur d'application (8) les messages envoyés audit haut de pile (15) lorsqu'il est validé pour le traitement réparti, dans lequel ledit haut de pile (15) et ledit bas de pile (16) fonctionnent ensemble lorsqu'ils sont validés pour le traitement réparti afin d'exécuter ladite pile conforme à l'architecture commune.

2. Le dispositif de communication de la revendication 1, dans lequel ladite architecture commune est l'architecture STREAMS.

3. Le dispositif de communication des revendications 1 ou 2, dans lequel ledit dispositif de communication réparti (14) comprend une liaison de communication connectée entre ledit processeur d'application (8) et ledit processeur E/S (9) pour les messages de communication entre ledit haut de pile (15) exécutant dans ledit processeur d'application (8) et ledit bas de pile (16) exécutant dans ledit processeur E/S (9).

4. Le dispositif de communication de la revendication 3, dans lequel ladite liaison de communication comprend un protocole de communication pour communiquer sur ladite liaison de communication et un moyen de transformation pour transformer les messages allant audit protocole de communication et en venant, dans lequel les messages sont communiqués sur ladite liaison de communication entre ledit haut de pile (15) exécutant dans ledit processeur d'application (8) et ledit bas de pile (16) exécutant dans ledit processeur E/S (9).

5. Le dispositif de communication de la revendication 1, dans lequel les messages comprennent des messages de données et des messages administratifs et ledit dispositif de communication distribué (14) comprend :
une liaison de communication connectée entre ledit processeur d'application (8) et ledit processeur E/S (9),
un moyen de transfert réagissant à ladite couche de substitution pour envoyer des messages de données sur ladite liaison de communication dudit haut de pile (15) exécutant dans ledit processeur d'application (8) audit bas de pile (16) exécutant dans ledit processeur E/S (9).

6. Le dispositif de communication de la revendication 5, dans lequel ladite liaison de communication comprend un protocole de communication pour communiquer des messages sur ladite liaison de communication et un moyen de transformation pour transformer les messages allant audit protocole de communication et en venant.

7. Le dispositif de communication de la revendication 6, dans lequel ledit moyen de transfert comprend :
un moyen pour transférer l'entrée de messages dudit haut de pile (15) à ladite première couche de substitution en tant que messages de sortie du haut audit bas de pile (16) pour l'exécution par ledit bas de pile (16),
un moyen pour transférer l'entrée de messages dudit bas de pile (16) en tant que messages de sortie audit haut de pile (15) pour l'exécution par ledit haut de pile (15).
